# EUROPEAN PATENT SPECIFICATION

(11) **EP 3 288 037 B1**
(45) Date of publication and mention of the grant of the patent: **08.11.2023**
(21) Application number: 16199768.9
(22) Date of filing: 21.11.2016
(51) Int. Cl.: G11C 17/16

(54) **MEMORY ARRAY HAVING A SMALL CHIP AREA**
SPEICHERMATRIX MIT KLEINEM CHIPBEREICH
RÉSEAU DE MÉMOIRE À FAIBLE OCCUPATION DE SURFACE

(30) Priority: 25.08.2016 US 201615246555
(43) Date of publication of application: 28.02.2018
(73) Proprietor: eMemory Technology Inc., Hsin-Chu 300 (TW)
(72) Inventor: Wu, Meng-Yi, Hsinchu County 302 (TW); Wong, Wei-Zhe, Hsinchu County 302 (TW); Chen, Hsin-Ming, Hsinchu City 300 (TW)
(74) Representative: Straus, Alexander

(56) References cited:
- US-A1- 2006 291 267
- US-A1- 2007 030 719
- US-A1- 2007 268 742
- US-A1- 2014 104 921
- US-A1- 2016 141 295

## Description

### Field of the Invention

This invention relates to a memory array, and more particularly, a memory array having a small chip area.

### Background of the Invention

Non-volatile memory (NVM) is a type of memory that retains information it stores even when no power is supplied to memory blocks thereof. Some examples include magnetic devices, optical discs, flash memory, and other semiconductor-based memory topologies. According to the programming times limit, non-volatile memory devices are divided into multi-time programmable (MTP) memory and one-time programmable (OTP) memory.

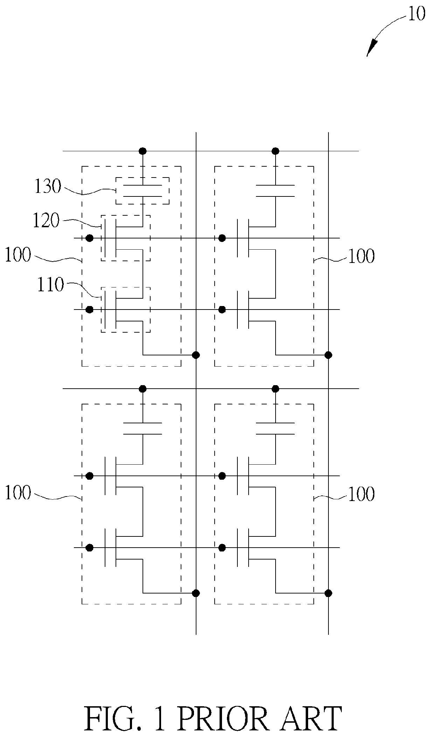

FIG. 1 shows a conventional OTP memory array 10 of prior art. A conventional OTP memory is also disclosed in US2016/141295 A1.

The memory array 10 includes a plurality of memory cells 100, each including a select transistor 110, a following gate transistor 120 and an antifuse transistor 130. The select transistor 110 is used to select the memory cell to be programmed. To avoid the select transistor 110 from being broken down due to the high voltage when programming the memory cell 100, the following gate transistor 120 is added between the antifuse transistor 130 and the select transistor 110. When programming the memory cell 100, the antifuse transistor 130 is ruptured and behaves as a metal-oxide-semiconductor capacitor, such that data of logic "1" can be written into the OTP memory cell 100.

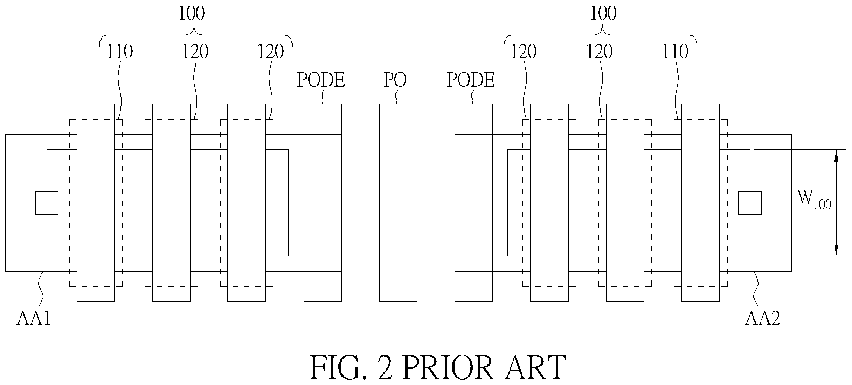

FIG. 2 shows a layout of the OTP memory cells 100. In FIG. 2, the two memory cells 100 are disposed in two different active areas AA1 and AA2 respectively. Also, due to the design rule of the layout, isolation structures, such as dummy poly PO and poly over diffusion edge PODE, are added between the active areas for the stability of the manufacturing process. Similarly, all the OTP memory cells 100 of the OTP memory array 10 are disposed in different active areas. Therefore, the dummy isolation structures can be found everywhere in the layout of the OTP memory array, which largely increases the chip area required by the OTP memory array 10. Thus, using the chip area more efficiently and designing a memory array with small chip area has become a topic.

### Summary of the Invention

The present invention aims at reducing the chip area of the memory array without affecting the driving ability.

This is achieved by a memory cell according to the claims here below. The dependent claims pertain to corresponding further developments and improvements.

As will be seen more clearly from the detailed description following below, the claimed memory cell includes a first select transistor, a first following gate transistor, an antifuse transistor, a second following gate transistor, and a second select transistor.

The first select transistor has a first terminal coupled to a bit line, a second terminal, and a gate terminal coupled to a word line. The first following gate transistor has a first terminal coupled to the second terminal of the first select transistor, a second terminal, and a gate terminal coupled to a following control line. The antifuse transistor has a first terminal coupled to the second terminal of the first following gate transistor, a second terminal, and a gate terminal coupled to an antifuse control line. The second following gate transistor has a first terminal coupled to the second terminal of the antifuse transistor, a second terminal, and a gate terminal coupled to the following control line. The second select transistor has a first terminal coupled to the second terminal of the second following gate transistor, a second terminal coupled to the bit line, and a gate terminal coupled to the word line.

Another embodiment of the present invention discloses a memory array. The memory array includes a plurality of memory cells, each includes a first select transistor, a first following gate transistor, an antifuse transistor, a second following gate transistor, and a second select transistor.

The first select transistor has a first terminal coupled to a bit line, a second terminal, and a gate terminal coupled to a word line. The first following gate transistor has a first terminal coupled to the second terminal of the first select transistor, a second terminal, and a gate terminal coupled to a following control line. The antifuse transistor has a first terminal coupled to the second terminal of the first following gate transistor, a second terminal, and a gate terminal coupled to an antifuse control line. The second following gate transistor has a first terminal coupled to the second terminal of the antifuse transistor, a second terminal, and a gate terminal coupled to the following control line. The second select transistor has a first terminal coupled to the second terminal of the second following gate transistor, a second terminal coupled to the bit line, and a gate terminal coupled to the word line. Memory cells disposed in a same column are disposed in a same active area.

### Brief Description of the Drawings

In the following, the invention is further illustrated by way of example, taking reference to the accompanying drawings. Thereof
FIG. 1 shows a conventional one-time programmable memory array of prior art;
FIG. 2 shows a layout of the OTP memory cells of FIG. 1;
FIG. 3 shows a memory array according to one embodiment of the present invention;
FIG. 4 shows voltages of the control lines coupled to the memory cells of the memory array of FIG. 3 during the program operation of a memory cell;
FIG. 5 shows voltages of the control lines coupled to the memory cells of the memory array of FIG. 3 during the read operation of a memory cell;
FIG. 6 shows voltages of the control lines coupled to the memory cells of the memory array of FIG. 3 during the reverse read operation of a memory cell;
FIG. 7 shows structures of the memory cells of the memory array of FIG. 3 according to one embodiment of the present invention;
FIG. 8 shows a layout of the memory cells of FIG. 7 according to one embodiment of the present invention;
FIG. 9 shows a structure of the memory cell according to another embodiment of the present invention;
FIG. 10 shows a structure of the memory cell according to another embodiment of the present invention;
FIG. 11 shows a structure of the memory cell according to another embodiment of the present invention; and
FIG. 12 shows a structure of the memory cell according to another embodiment of the present invention.

### Detailed Description

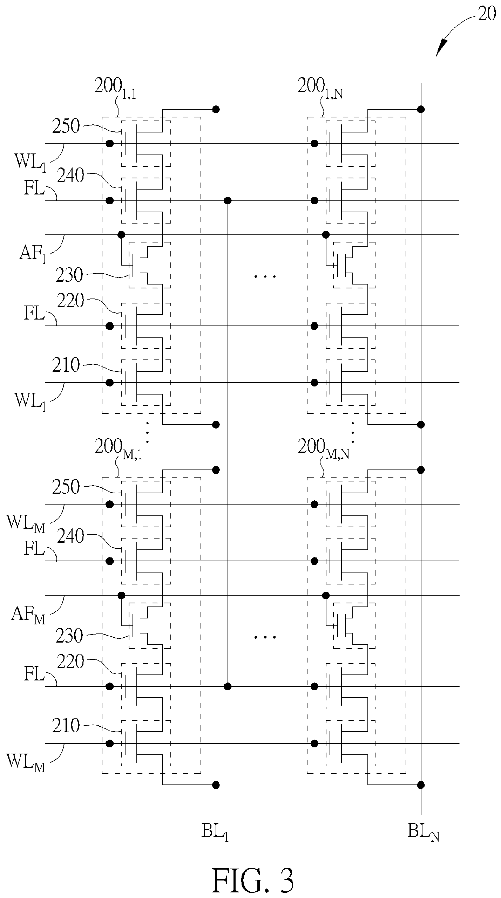

FIG. 3 shows a memory array 20 according to one embodiment of the present invention. The memory array 20 includes MxN memory cells 200_{1,1} to 200_{M,N}, where M and N are positive integers. Each memory cell 200_{1,1} to 200_{M,N} includes a first select transistor 210, a first following gate transistor 220, an antifuse transistor 230, a second following gate transistor 240, and a second select transistor 250.

The memory cells 200_{1,1} to 200_{M,N} have similar structures and operation principles. For example, the first select transistor 210 of the memory cell 200_{1,1} has a first terminal coupled to a bit line BL₁, a second terminal, and a gate terminal coupled to a word line WL₁. The first following gate transistor 220 of the memory cell 200_{1,1} has a first terminal coupled to the second terminal of the first select transistor 210 of the memory cell 200_{1,1}, a gate terminal coupled to a following control line FL, and a second terminal. The antifuse transistor 230 of the memory cell 200_{1,1} has a first terminal coupled to the second terminal of the first following gate transistor 220 of the memory cell 200_{1,1}, a gate terminal coupled to an antifuse control line AF₁, and a second terminal. The second following gate transistor 240 of the memory cell 200_{1,1} has a first terminal coupled to the second terminal of the antifuse transistor 230 of the memory cell 200_{1,1}, a gate terminal coupled to the following control line FL, and a second terminal. The second select transistor 250 of the memory cell 200_{1,1} has a first terminal coupled to the second terminal of the second following gate transistor 240 of the memory cell 200_{1,1}, a second terminal coupled to the bit line BL₁, and a gate terminal coupled to the word line WL₁.

Since the first select transistor 210 and the second select transistor 250 of the memory cell 200_{1,1} are coupled to the same word line WL₁, the first select transistor 210 and the second select transistor 250 of the memory cell 200_{1,1} are operated simultaneously. Also, since the first following gate transistor 220 and the second following gate transistor 240 of the memory cell 200_{1,1} are coupled to the same following control line FL, the first following gate transistor 220 and the second following gate transistor 240 of the memory cell 200_{1,1} are operated simultaneously.

In addition, in FIG. 3, memory cells disposed in the same row are coupled to the same antifuse control line, the same following control line, the same word line, and different bit lines. For example, the memory cells 200_{1,1} to 200_{1,N} are disposed in the same row, and memory cells 200_{1,1} to 200_{1,N} are coupled to the same antifuse control line AF₁, the same following control line FL, and the same word line WL₁. Also, the memory cell 200_{1,1} is coupled to the bit line BL₁ while the memory cell 200_{1,N} is coupled to the bit line BL_{N}. Similarly, the memory cells 200_{M, 1} to 200_{M,N} are disposed in the same row, and memory cells 200_{M,1} to 200_{M,N} are coupled to the same antifuse control line AF_{M}, the same following control line FL, and the same word line WL_{M}. Also, the memory cell 200_{M, 1} is coupled to the bit line BL₁ while the memory cell 200_{M,N} is coupled to the bit line BL_{N}.

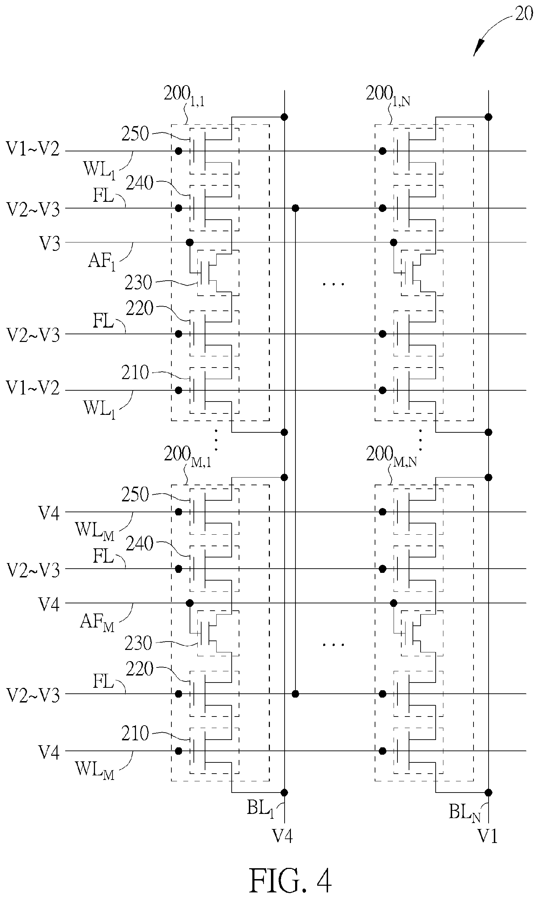

Furthermore, memory cells disposed in the same column are coupled to different antifuse control lines, different word lines, the same following control line, and the same bit line. For example, the memory cells 200_{1,1} to 200_{M,1} are disposed in the same column, the memory cell 200_{1,1} is coupled to the antifuse control line AF₁ and the word line WL₁, while the memory cell 200_{M,1} is coupled to the antifuse control line AF_{M} and the word line WL_{M}. Also, the memory cell 200_{1,1} and the memory cell 200_{M,1} are coupled to the same the following control line FL and the same bit line BL₁. Similarly, the memory cells 200_{1,N} to 200_{M,N} are disposed in the same column, the memory cell 200_{1,N} is coupled to the antifuse control line AF₁ and the word line WL₁, while the memory cell 200_{M,N} is coupled to the antifuse control line AF_{M} and the word line WL_{M}. Also, the memory cell 200_{1,N} and the memory cell 200_{M,N} are coupled to the same the following control line FL and the same bit line BL_{N}. In the present embodiment, memory cells 200_{1,1} to 200_{M,N} are coupled to the same following control line FL, however, the memory cells 200_{1,1} to 200_{M,N} can still be operated independently by other control lines. Although memory cells disposed in different rows can be coupled to different antifuse control lines as shown in FIG. 3, in some embodiments of the present invention, the antifuse control lines AF₁ to AF_{M} may also be coupled together and be operated simultaneously. FIG. 4 shows voltages of the control lines coupled to the memory cells 200_{1,1} to 200_{M,N} during the program operation of the memory cell 200_{1,1}. During the program operation of the memory cell 200_{1,1}, the word line WL₁ can be in a range from a first voltage V1 to a second voltage V2, the following control line FL can be in a range from the second voltage V2 to a third voltage V3, the antifuse control line AF₁ can be at the third voltage V3, and the bit line BL₁ can be at a fourth voltage V4.

The third voltage V3 is greater than the second voltage V2, the second voltage V2 is greater than the first voltage V1, and the first voltage V1 is greater than the fourth voltage V4. In some embodiments, for memory array manufactured with the 16nm process, the third voltage V3 can be 5V, the second voltage V2 can be 1.8V, the first voltage V1 can be 0.8V, and the fourth voltage V4 can be the ground voltage. However, in other embodiments, if the memory array is manufactured with other processes, the third voltage V3, the second voltage V2, the first voltage V1, and the fourth voltage V4 may have different values according to the requirement.

During the program operation of the memory cell 200_{1,1}, the first select transistor 210, the first following gate transistor 220, the second following gate transistor 240, and the second select transistor 250 of the memory cell 200_{1,1} are turned on. Therefore, the antifuse transistor 230 of the memory cell 200_{1,1} will be ruptured by the high voltage difference between the antifuse control line AF₁ and the bit line BL₁, that is, the voltage difference between the third voltage V3 and the fourth voltage V4.

Also, during the program operation of the memory cell 200_{1,1}, the memory cell 200_{1,N} disposed in the same row as the memory cell 200_{1,1} should not be programmed. Therefore, the bit line BL_{N} coupled to the unselected memory cell 200_{1,N} can be at the first voltage V1. In this case, the voltage difference applied to the antifuse transistor 230 of the memory cell 200_{1,N} will not be high enough to rupture the antifuse transistor 230 of the memory cell 200_{1,N} and the memory cell 200_{1,N} will not be programmed.

Furthermore, during the program operation of the memory cell 200_{1,1}, the memory cell 200_{M,1} disposed in the same column as the memory cell 200_{1,1} should not be programmed. Therefore, the word line WL_{M} coupled to the unselected memory cell 200_{M,1} can be at the fourth voltage V4, and the antifuse control line AF_{M} coupled to the unselected memory cell 200_{M, 1} can be at the fourth voltage V4. In this case, since the antifuse control line AF_{M} is at a low voltage, the memory cell 200_{M,1} will not be programmed.

Also, although the voltage of the antifuse control line AF₁ may be different from the voltage of the rest of the antifuse control lines, such as the antifuse control line AF_{M} as shown in FIG. 4 during the program operation of the memory cell 200_{1,1}, the antifuse control lines AF₁ to AF_{M} may also be set to be at the same voltage in some embodiments of the present invention. That is, the antifuse control lines AF₁ to AF_{M} can be coupled together and be operated simultaneously. In this case, since the word line WL_{M} is still at the fourth voltage V4, the unselected memory cell 200_{M,1} will not be programmed. Furthermore, the other unselected memory cells disposed in different columns from the memory cell 200_{1,1}, such as the memory cell 200_{M,N}, may apply the same operation as the memory cell 200_{1,N} in this case.

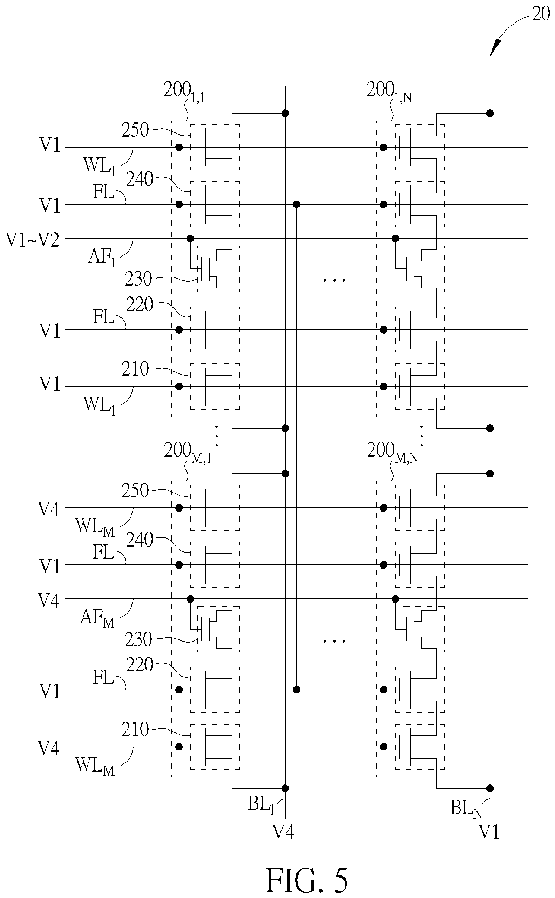

FIG. 5 shows voltages of the control lines coupled to the memory cells 200_{1,1} to 200_{M,N} during the read operation of the memory cell 200_{1,1}. During a read operation of the memory cell 200_{1,1}, the word line WL₁ is at a first voltage V1, the following control line FL can be at the first voltage V1, the antifuse control line AF₁ can be in a range from the first voltage V1 to the second voltage V2, and the bit line BL₁ can be at a fourth voltage V4. In this case, the first select transistor 210, the first following gate transistor 220, the second following gate transistor 240, and the second select transistor 250 of the memory cell 200_{1,1} are turned on so that the data stored in the antifuse transistor 230 of the memory cell 200_{1,1} can be read from the bit line BL₁.

Also, during the read operation of the memory cell 200_{1,1}, the memory cell 200_{1,N} disposed in the same row as the memory cell 200_{1,1} may not be read. Therefore, during the read operation of the memory cell 200_{1,1}, the bit line BL_{N} coupled to the unselected memory cell 200_{1,N} can be at the first voltage V1. In this case, the first select transistor 210, the first following gate transistor 220, the second following gate transistor 240, and the second select transistor 250 of the memory cell 200_{1,N} can be turned off so that the data stored in the antifuse transistor 230 of the memory cell 200_{1,N} will not be read from the bit line BL_{N}.

Furthermore, during the read operation of the memory cell 200_{1,1}, the memory cell 200_{M,1} disposed in the same column as the memory cell 200_{1,1} should not be read. Therefore, during the read operation of the memory cell 200_{1,1}, the word line WL_{M} coupled to the unselected memory cell 200_{M, 1} can be at the fourth voltage V4, and the antifuse control line AF_{M} coupled to the unselected memory cell 200_{M,1} can be at the fourth voltage V4. In this case, the first select transistor 210 and the second select transistor 250 of the memory cell 200_{M,1} can be turned off so that the data stored in the antifuse transistor 230 of the memory cell 200_{M,1} will not be read from the bit line BL₁.

Also, although the voltage of the antifuse control line AF₁ may be different from the voltage of the rest of the antifuse control lines, such as the antifuse control line AF_{M} as shown in FIG. 5 during the read operation of the memory cell 200_{1,1}, the antifuse control lines AF₁ to AF_{M} may also be set to be at the same voltage in some embodiments of the present invention. That is, the antifuse control lines AF₁ to AF_{M} can be coupled together and be operated simultaneously. In this case, since the word line WL_{M} is still at the fourth voltage V4, the unselected memory cell 200_{M,1} will not be read. Furthermore, the other unselected memory cells disposed in different columns from the memory cell 200_{1,1}, such as the memory cell 200_{M,N}, may apply the same operation as the memory cell 200_{1,N} in this case.

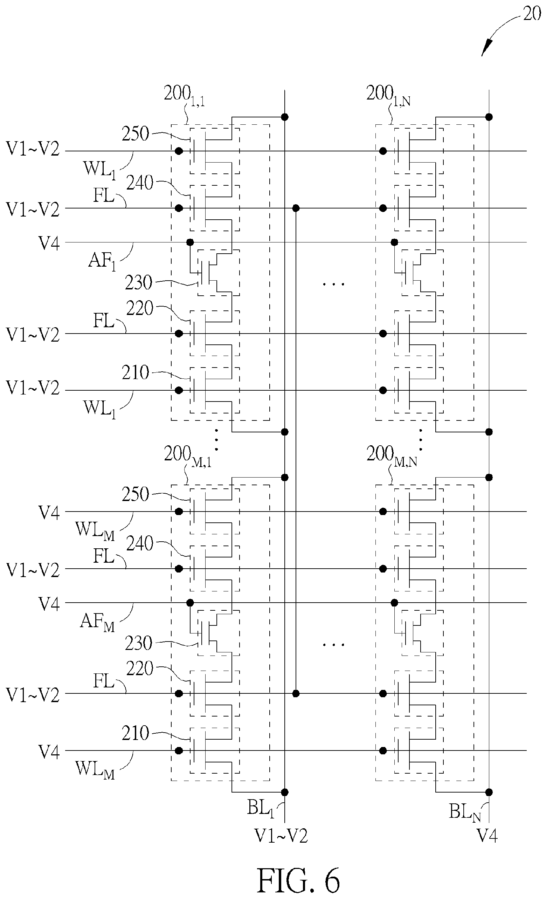

In some embodiments, the memory array may support reverse read operations for reading the data in the memory cell. FIG. 6 shows voltages of the control lines coupled to the memory cells 200_{1,1} to 200_{M,N} during the reverse read operation of the memory cell 200_{1,1}. During the reverse read operation of the memory cell 200_{1,1}, the word line WL₁ can be in a range from the first voltage V1 to the second voltage V2, the following control line FL can be in a range from the first voltage V1 to the second voltage V2, the antifuse control line AF₁ can be at the fourth voltage V4, and the bit line BL₁ can be in a range from the first voltage V1 to the second voltage V2. In this case, the first select transistor 210, the first following gate transistor 220, the second following gate transistor 240, and the second select transistor 250 of the memory cell 200_{1,1} are turned on so that the data stored in the antifuse transistor 230 of the memory cell 200_{1,1} can be read from the bit line BL₁.

Also, during the reverse read operation of the memory cell 200_{1,1}, the memory cell 200_{1,N} disposed in the same row as the memory cell 200_{1,1} should not be read. Therefore, during the reverse read operation of the memory cell 200_{1,1}, the bit line BL_{N} coupled to the unselected memory cell 200_{1,N} can be at the fourth voltage V4. In this case, the first select transistor 210, the first following gate transistor 220, the second following gate transistor 240, and the second select transistor 250 of the memory cell 200_{1,N} can be turned off so that the data stored in the antifuse transistor 230 of the memory cell 200_{1,N} will not be read from the bit line BL_{N}.

Furthermore, during the reverse read operation of the memory cell 200_{1,1}, the memory cell 200_{M,1} disposed in the same column as the memory cell 200_{1,1} should not be read. Therefore, during the reverse read operation of the memory cell 200_{1,1}, the word line WL_{M} coupled to the unselected memory cell 200_{M,1} can be at the fourth voltage V4, and the antifuse control line AF_{M} coupled to the unselected memory cell 200_{M,1} can be at the fourth voltage V4. In this case, the first select transistor 210 and the second select transistor 250 of the memory cell 200_{M,1} can be turned off so that the data stored in the antifuse transistor 230 of the memory cell 200_{M,1} will not be read from the bit line BL₁.

Also, in some embodiments, the antifuse control lines AF₁ to AF_{M} can be coupled together and be operated simultaneously during the reverse read operation of the memory cell 200_{1,1}. In this case, since the word line WL_{M} is still at the fourth voltage V4, the unselected memory cell 200_{M,1} will not be read. Furthermore, the other unselected memory cells disposed in different columns from the memory cell 200_{1,1}, such as the memory cell 200_{M,N}, may apply the same operation as the memory cell 200_{1,N} in this case.

Since the first select transistor 210 and the first following gate transistor 220 are operated simultaneously with the second select transistor 250 and the second following gate transistor 240, the read current generated by each of the memory cells 200_{1,1} to 200_{M,N} of the memory array 20 can be outputted to the corresponding bit line through two different paths. Therefore, the gate width of the first select transistor 210, the gate width of the second select transistor 250, the gate width of the first following gate transistor 220, and the gate width of the second following gate transistor 240 can be smaller than the gate width of the select transistor 110 of prior art without affecting the driving ability. For example, by reducing the gate widths of the first select transistor 210, the second select transistor 250, the first following gate transistor 220, and the second following gate transistor 240 by 50%, the two current paths formed by the first select transistor 210, the first following gate transistor 220, the second following gate transistor 240, and the second select transistor 250 can still sustain the original driving ability.

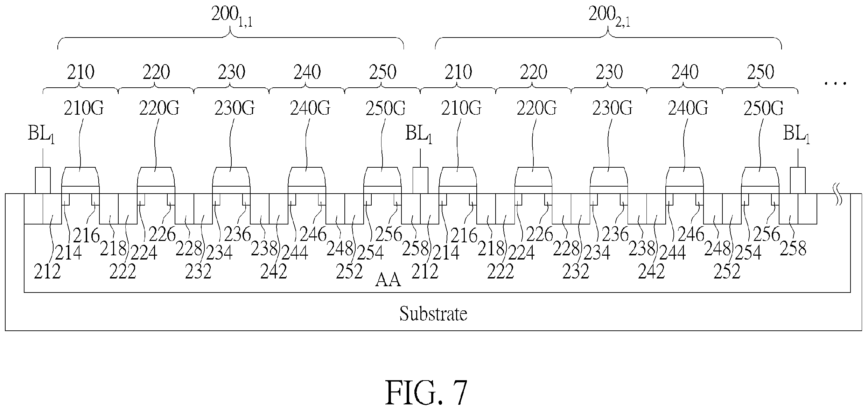

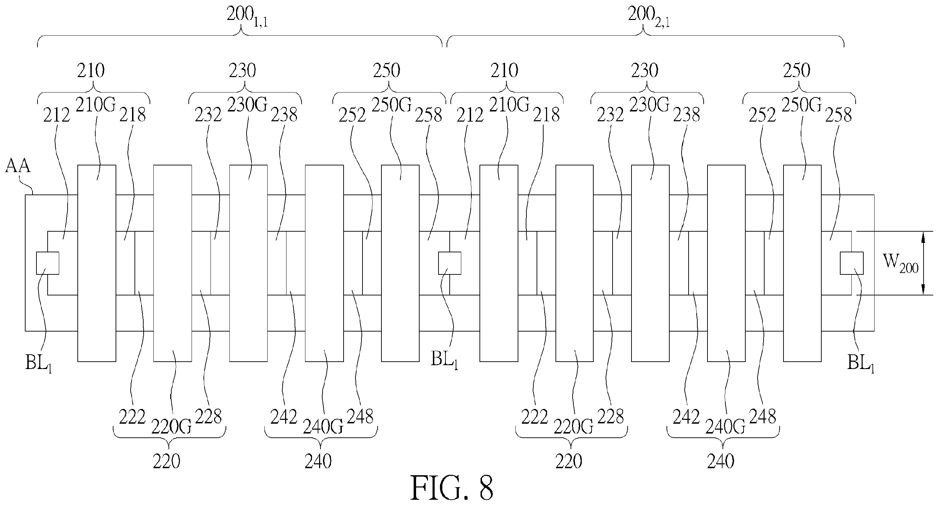

FIG. 7 shows structures of the memory cells 200_{1,1} and 200_{2,1} of the memory array 20 according to one embodiment of the present invention. The memory cells 200_{1,1} and 200_{2,1} have the same structures. FIG. 8 shows a layout of the memory cells 200_{1,1} and 200_{2,1} of the memory array 20.

In FIG. 7, the first select transistor 210 further includes a first source/drain extension region 214 coupled to the first terminal 212 of the first select transistor 210 and a second source/drain extension region 216 coupled to the second terminal 218 of the first select transistor 210. The first source/drain extension region 214 and the second source/drain extension region 216 of the first select transistor 210 are disposed below the gate terminal 210G of the first select transistor 210.

The first following gate transistor 220 further includes a first source/drain extension region 224 coupled to the first terminal 222 of the first following gate transistor 220, and a second source/drain extension region 226 coupled to the second terminal 228 of the first following gate transistor 220. The first source/drain extension region 224 and the second source/drain extension region 226 are disposed below the gate terminal 220G of the first following gate transistor 220.

The antifuse transistor 230 further includes a first source/drain extension region 234 coupled to the first terminal 232 of the antifuse transistor 230, and a second source/drain extension region 236 coupled the second terminal 238 of the antifuse transistor 230. The first source/drain extension region 234 and the second source/drain extension region 236 of the antifuse transistor 230 are disposed below the gate terminal 230G of the antifuse transistor 230.

The second following gate transistor 240 includes a first source/drain extension region 246 coupled to the second terminal 248 of the second following gate transistor 240, and a second source/drain extension region 244 coupled to the first terminal 242 of the second following gate transistor 240. The first source/drain extension region 246 and the second source/drain extension region 244 are disposed below the gate terminal 240G of the second following gate transistor 240.

The second select transistor 250 includes a first source/drain extension region 254 coupled to the first terminal 252 of the second select transistor 250 and a second source/drain extension region 256 coupled to the second terminal 258 of the second select transistor 250. The first source/drain extension region 254 and the second source/drain extension region 256 of the second select transistor 250 are disposed below the gate terminal 250G of the second select transistor 250.

Since the first terminal 212 of the first select transistor 210 and the second terminal 258 of the second select transistor 250 of the memory cell 200_{1,1} are both coupled to the bit line BL₁, the memory cell 200_{1,1} can be disposed in the same active area AA with other memory cells that are coupled to the same bit line BL₁. That is, memory cells disposed in the same column can all be disposed in the same active area. For example, since the memory cell 200_{2,1} to memory cell 200_{M,1} are also coupled to the bit line BL₁, the memory cell 200_{2,1} to memory cell 200_{M,1} can also be disposed in the same active area AA as the memory cell 200_{1,1}.

By sharing the same active area, most of the isolation structures, such as dummy poly or poly over diffusion edge used in the prior art, can be saved, and the memory array 20 can use the area efficiently. Although each of the memory cells 200_{1,1} to 200_{M,N} may include more transistors than the memory cell 100, the gate widths of the first select transistor 210, the second select transistor 250, the first following gate transistor 220 and the second following gate transistor 240 can be smaller than the gate widths of the select transistor 110 and the following gate transistor 120 of prior art. Therefore, the total chip area of the memory array 20 can still be reduced significantly. For example, the gate widths W₂₀₀ of the first select transistor 210, the second select transistor 250, the first following gate transistor 220 and the second following gate transistor 240 as shown in FIG. 8 can be 50% smaller than the gate widths W₁₀₀ of the select transistor 110 and the following gate transistor 120 as shown in FIG. 2. In this case, the area of the memory array 20 can be 30% smaller than the memory array of prior art without deteriorating the driving ability.

In some embodiments of the present invention, the first select transistor 210, the first following gate transistor 220, the second following gate transistor 240, and the second select transistor 250 are N-type metal-oxide-semiconductor transistors, and the antifuse transistor 230 is formed as a metal-oxide-semiconductor capacitor. In this case, the first terminal 212 and the second terminal 218 of the first select transistor 210, the first terminal 222 and the second terminal 228 of the first following gate transistor 220, the first terminal 232 and the second terminal 238 of the antifuse transistor 230, the first terminal 242 and the second terminal 248 of the second following gate transistor 240, the first terminal 252 and the second terminal 258 of the second select transistor 250 can be N-type doped sources or drains. Also, the source/drain extension regions 214, 216, 224, 226, 234, 236, 244, 246, 254, and 256 can be N-typed doped regions having lower doping density than the sources and drains.

The source/drain extension regions can help to reduce the punch through effect. However, since two current paths of each of the memory cell 200_{1,1} to 200_{M,N} are controlled by the first select transistor 210, the second select transistor 250, the first following gate transistor 220 and the second following gate transistor 240, the punch through effect on the antifuse transistor 230 can be avoided by the select transistors and the following gate transistors without adding first source/drain extension region 234 and the second source/drain extension region 236.

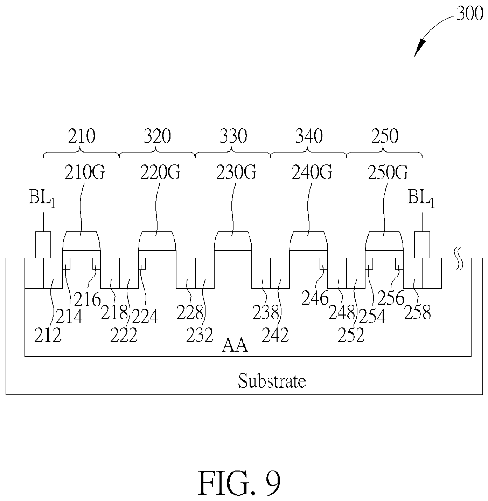

FIG. 9 shows a structure of the memory cell 300 according to one embodiment of the present invention. The memory cells 300 and 200_{1,1} have similar structures. The main difference between the two memory cells is in that the memory cell 300 includes the first select transistor 210, the first following gate transistor 320, the antifuse transistor 330, the second following gate transistor 340, and the second select transistor 250.

The first following gate transistor 320 includes the first source/drain extension region 224 coupled to the first terminal 222 of the first following gate transistor 320, but does not include the second source/drain extension region 226 as the first following gate transistor 220. The antifuse transistor 330 does not include the first source/drain extension region 234 and the second source/drain extension region 236. Also, The second following gate transistor 340 includes the first source/drain extension region 246 coupled to the second terminal 248 of the second following gate transistor 340,but does not include the second source/drain extension region 244 as the second following gate transistor 240.

By removing the source/drain extension regions near the antifuse transistor 330, the junction leakage current generated by the antifuse transistor 330 of the memory cell 300 can be reduced so as to reduce the power consumption of the memory cell 300.

Since both the first terminal 212 of the first select gate 210 and second terminal 258 of the second select gate 250 of the memory cell 300 are still coupled to the bit line BL₁, the memory cell 300 can be disposed in the same active area AA with other memory cells that are coupled to the same bit line BL₁. That is, memory cells disposed in the same column can still be disposed in the same active area. Therefore, when using the memory cell 300 to replace the memory cells 200_{1,1} to 200_{M,N} in the memory array 20, the total chip area can still be smaller than the memory array of prior art.

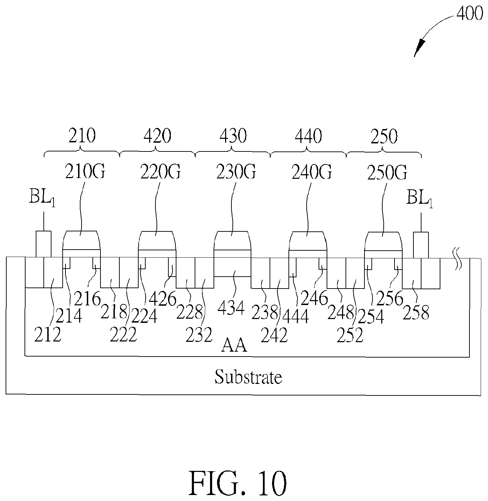

Furthermore, in some embodiments, some of the source/drain extension regions can be replaced by modified source/drain extension regions having even lower doping density than the source/drain extension regions. FIG. 10 shows a structure of the memory cell 400 according to one embodiment of the present invention. The memory cells 400 and 200_{1,1} have similar structures. The main difference between the two memory cells is in that the memory cell 400 includes the first select transistor 210, the first following gate transistor 420, the antifuse transistor 430, the second following gate transistor 440, and the second select transistor 250.

The first following gate transistor 420 includes the first source/drain extension region 224 coupled to the first terminal 222 of the first following gate transistor 420, and a modified source/drain extension region 426 coupled to the second terminal 228 of the first following gate transistor 420. The first source/drain extension region 224 and the modified source/drain extension region 426 are disposed below the gate terminal 220G of the first following gate transistor 420.

The antifuse transistor 430 include a modified source/drain extension region 434 coupled to the first terminal 232 and the second terminal 238 of the antifuse transistor 430. The modified source/drain extension region 434 is disposed below the gate terminal 230G of the antifuse transistor 430.

The second following gate transistor 440 includes the first source/drain extension region 246 coupled to the second terminal 248 of the second following gate transistor 440, and a modified source/drain extension region 444 coupled to the first terminal 242 of the second following gate transistor 440. The first source/drain extension region 246 and the modified source/drain extension region 444 are disposed below the gate terminal 240G of the second following gate transistor 440.

In this case, the antifuse transistor 430 is formed as an antifuse varactor. Also, since both the first terminal 212 of the first select gate 210 and second terminal 258 of the second select gate 250 of the memory cell 400 are still coupled to the bit line BL₁, the memory cell 400 can be disposed in the same active area AA with other memory cells that are coupled to the same bit line BL₁. That is, memory cells disposed in the same column can still be disposed in the same active area. Therefore, when using the memory cell 400 to replace the memory cells 200_{1,1} to 200_{M,N} in the memory array 20, the total chip area can still be smaller than the memory array of prior art.

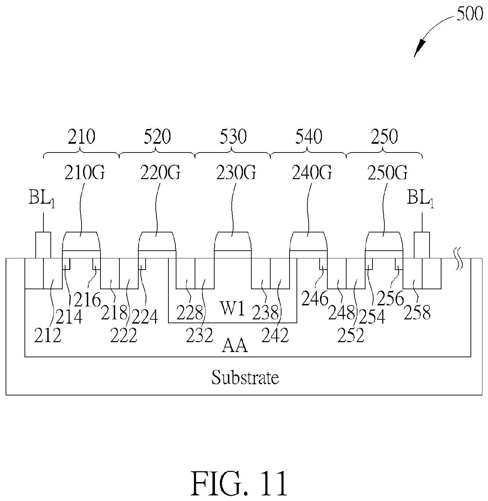

FIG. 11 shows a structure of the memory cell 500 according to one embodiment of the present invention. The memory cells 500 and 200_{1,1} have similar structures. The main difference between the two memory cells is in that the memory cell 500 includes the first select transistor 210, the first following gate transistor 520, the antifuse transistor 530, the second following gate transistor 540, and the second select transistor 250.

In FIG. 11, the second terminal 228 of the first following gate transistor 520, the first terminal 232 and the second terminal 238 of the antifuse transistor 530, and the first terminal 242 of the second following gate transistor 540 are disposed in a well W1. In some embodiments, the first select transistor 210, the first following gate transistor 520, the second select transistor 250, and the second following gate transistor 540 are formed by N-type metal-oxide-semiconductor field effect transistors, and the well W1 can be an N-well.

In this case, the antifuse transistor 530 is formed as an antifuse varactor. Also, since both the first terminal 212 of the first select gate 210 and the second terminal 258 of the second select gate 250 of the memory cell 500 are still coupled to the bit line BL₁, the memory cell 500 can be disposed in the same active area AA with other memory cells that are coupled to the same bit line BL₁. That is, memory cells disposed in the same column can still be disposed in the same active area. Therefore, when using the memory cell 500 to replace the memory cells 200_{1,1} to 200_{M,N} in the memory array 20, the total chip area can still be smaller than the memory array of prior art.

In addition, in the memory array 20, the gate oxide thickness of the gate terminal 210G of first select transistor 210, the gate oxide thickness of the gate terminal 220G of first following gate transistor 220, the gate oxide thickness of the gate terminal 230G of antifuse transistor 230, the gate oxide thickness of the gate terminal 240G of the second following gate transistor 240, and the gate oxide thickness of the gate terminal 250G of the second select transistor 250 are substantially the same.

However, in some embodiments, since the select transistors and the following gate transistors may receive external signals, the select transistors and the following gate transistors may be formed as input/output devices, which are capable of enduring higher voltages, while the antifuse transistor may be formed as a core device, which has a lower voltage endurance. In this case, the gate oxide thickness of the select transistors and the gate oxide thickness of the following gate transistors may be greater than the gate oxide thickness of the antifuse transistor.

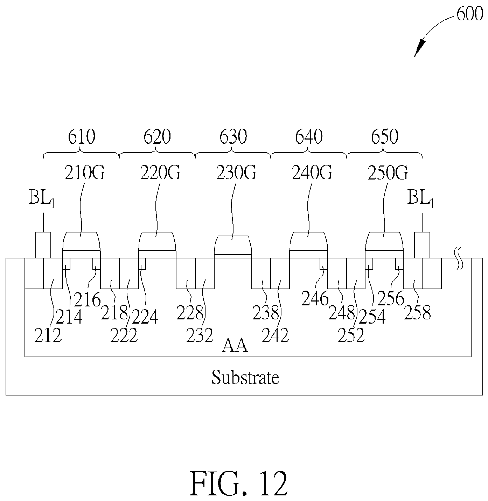

FIG. 12 shows a structure of the memory cell 600 according to one embodiment of the present invention. The memory cells 600 and 200_{1,1} have the similar structures. The main difference between the two memory cells is in that memory cell 600 includes the first select transistor 610, the first following gate transistor 620, the antifuse transistor 630, the second following gate transistor 640, and the second select transistor 650 while the gate oxide thickness of the gate terminal of the first select transistor 610, the gate oxide thickness of the gate terminal of the first following gate transistor 620, the gate oxide thickness of the gate terminal of the second following gate transistor 640, and the gate oxide thickness of the gate terminal of the second select transistor 650 are substantially the same and are greater than the gate oxide thickness of the gate terminal of the antifuse transistor 630. In this case, the memory cell 600 can be operated with signals of higher voltage than the memory cell 200_{1,1}.

In summary, since each of the memory cells provided by the embodiments of the present invention can be coupled to the corresponding bit line through two different paths, the gate widths of the transistors of each memory cell can be reduced, and the memory cells coupled to the same bit line can be disposed in the same active region. Therefore, the total area of the memory arrays using the memory cells provided by the embodiments of the present invention can be significantly reduced without affecting the driving ability.

## Claims

1. A memory cell (200_{1,1} to 200_{M,N}), comprising:
a first select transistor (210, 610) having a first terminal (212) coupled to a bit line (BL₁ to BL_{N}), a second terminal (218), and a gate terminal (210G) coupled to a word line (WL₁ to WL_{M});
a first following gate transistor (220, 320, 420, 520, 620) having a first terminal (222) coupled to the second terminal (218) of the first select transistor (210, 610), a second terminal (228), and a gate terminal (220G) coupled to a following control line (FL);
an antifuse transistor (230, 330, 430, 530, 630) having a first terminal (232) directly coupled only to the second terminal (228) of the first following gate transistor (220, 320, 420, 520, 620), a second terminal (238), and a gate terminal (230G) coupled to an antifuse control line (AF₁ to AF_{M});
**characterized by** further comprising:
a second following gate transistor (240, 340, 440, 540, 640) having a first terminal (242) coupled to the second terminal (238) of the antifuse transistor (230, 330, 430, 530, 630), a second terminal (248), and a gate terminal (240G) coupled to the following control line (FL); and
a second select transistor (250, 650) having a first terminal (252) coupled to the second terminal (248) of the second following gate transistor (240, 340, 440, 540, 640), a second terminal (258) coupled to the bit line (BL₁ to BL_{N}), and a gate terminal (250G) coupled to the word line (WL₁ to WL_{M}).

2. The memory cell (200_{1,1} to 200_{M,N}) of claim 1, **characterized in that**:
the first select transistor (210, 610) further comprises a first source/drain extension region (214) coupled to the first terminal (212) of the first select transistor (210, 610) and a second source/drain extension region (216) coupled the second terminal (218) of the first select transistor (210, 610), the first source/drain extension region (214) and the second source/drain extension region (216) of the first select transistor (210, 610) are disposed below the gate terminal (210G) of the first select transistor (210, 610);
the first following gate transistor (220, 320, 420, 520, 620) further comprises a first source/drain extension region (224) coupled to the first terminal (222) of the first following gate transistor (220, 320, 420, 520, 620) and below the gate terminal (220G) of the first following gate transistor (220, 320, 420, 520, 620);
the second following gate transistor (240, 340, 440, 540, 640) comprises a first source/drain extension region (246) coupled to the second terminal (248) of the second following gate transistor (240, 340, 440, 540, 640) and below the gate terminal (240G) of the second following gate transistor (240, 340, 440, 540, 640); and
the second select transistor (250, 650) comprises a first source/drain extension region (254) coupled to the first terminal (252) of the second select transistor (250, 650) and a second source/drain extension region (256) coupled the second terminal (258) of the second select transistor (250, 650), the first source/drain extension region (254) and the second source/drain extension region (256) of the second select transistor (250, 650) are disposed below the gate terminal (250G) of the second select transistor (250, 650).

3. The memory cell (200_{1,1} to 200_{M,N}) of claim 2, **characterized in that**:
the first following gate transistor (220) further comprises a second source/drain extension region (226) coupled to the second terminal (228) of the first following gate transistor (220) and below the gate terminal (220G) of the first following gate transistor (220);
the antifuse transistor (230) further comprises a first source/drain extension region (234) coupled to the first terminal (232) of the antifuse transistor (230) and a second source/drain extension region (236) coupled the second terminal (238) of the antifuse transistor (230), the first source/drain extension region (234) and the second source/drain extension region (236) of the antifuse transistor (230) are disposed below the gate terminal (230G) of the antifuse transistor (230); and
the second following gate transistor (240) comprises a second source/drain extension region (244) coupled to the first terminal (242) of the second following gate transistor (240) and below the gate terminal (240G) of the second following gate transistor (240).

4. The memory cell (200_{1,1} to 200_{M,N}) of claim 2 or 3, **characterized in that** the antifuse transistor (230) is a metal-oxide-semiconductor capacitor.

5. The memory cell (200_{1,1} to 200_{M,N}) of claim 2, **characterized in that**:
the first following gate transistor (420) further comprises a modified source/drain extension region (426) coupled to the second terminal (228) of the first following gate transistor (420) and below the gate terminal (220G) of the first following gate transistor (420);
the antifuse transistor (430) further comprises a modified source/drain extension region (434) coupled to the first terminal (232) and the second terminal (238) of the antifuse transistor (430) and below the gate terminal (230G) of the antifuse transistor (430); and
the second following gate transistor (440) comprises a modified source/drain extension region (444) coupled to the first terminal (242) of the second following gate transistor (440) and below the gate terminal (240G) of the second following gate transistor (440);
wherein the modified source/drain extension region (426) of the first following gate transistor (420), the modified source/drain extension region (434) of the antifuse transistor (430), and the modified source/drain extension region (444) of the second following gate transistor (440) have lower doping density than the first source/drain extension region (224) of the first following gate transistor (420) and first source/drain extension region (246) of the first following gate transistor (440).

6. The memory cell (200_{1,1} to 200_{M,N}) of claim 2, **characterized in that**:
the second terminal (228) of the first following gate transistor (520), the first terminal (232) and the second terminal (238) of the antifuse transistor (530), and the first terminal (242) of the second following gate transistor (540) are disposed in a well (W1).

7. The memory cell (200_{1,1} to 200_{M,N}) of claim 6, **characterized in that**:
the first select transistor (210, 610), the first following gate transistor (520), the second select transistor (250), and the second following gate transistor (540) are formed by N-type metal-oxide-semiconductor field effect transistors; and
the well (W1) is an N-well.

8. The memory cell (200_{1,1} to 200_{M,N}) of claim 5 or 6, **characterized in that** the antifuse transistor (530) is a an antifuse varactor.

9. The memory cell (200_{1,1} to 200_{M,N}) of claim 1, **characterized in that** a gate oxide thickness of the gate terminal of first select transistor (210), a gate oxide thickness of the gate terminal of first following gate transistor (220), a gate oxide thickness of the gate terminal of antifuse transistor (230), a gate oxide thickness of the gate terminal of second following gate transistor (240), and a gate oxide thickness of the gate terminal of second select transistor (250) are substantially the same.

10. The memory cell (200_{1,1} to 200_{M,N}) of claim 1, **characterized in that** a gate oxide thickness of the gate terminal of first select transistor (610), a gate oxide thickness of the gate terminal of first following gate transistor (620), a gate oxide thickness of the gate terminal of second following gate transistor (640), and a gate oxide thickness of the gate terminal of second select transistor (650) are substantially the same and are greater than a gate oxide thickness of the gate terminal of the antifuse transistor (630).

11. A memory array (20) **characterized by** comprising a plurality of memory cells (200_{1,1} to 200_{M,N}) of claim 1, wherein:
memory cells disposed in a same column are disposed in a same active area.

12. The memory array (20) of claim 11, **characterized in that**:
the first select transistor (210, 610) further comprises a first source/drain extension region (214) coupled to the first terminal (212) of the first select transistor (210, 610) and a second source/drain extension region (216) coupled the second terminal (218) of the first select transistor (210, 610), the first source/drain extension region (214) and the second source/drain extension region (216) of the first select transistor (210, 610) are disposed below the gate terminal (210G) of the first select transistor (210, 610);
the first following gate transistor (220, 320, 420, 520, 620) further comprises a first source/drain extension region (224) coupled to the first terminal (222) of the first following gate transistor (220, 320, 420, 520, 620) and below the gate terminal (220G) of the first following gate transistor (220, 320, 420, 520, 620);
the second following gate transistor (240, 340, 440, 540, 640) comprises a first source/drain extension region (246) coupled to the second terminal (248) of the second following gate transistor (240, 340, 440, 540, 640) and below the gate terminal (240G) of the second following gate transistor (240, 340, 440, 540, 640); and
the second select transistor (250, 650) comprises a first source/drain extension region (254) coupled to the first terminal (252) of the second select transistor (250, 650) and a second source/drain extension region (256) coupled the second terminal (258) of the second select transistor (250, 650), the first source/drain extension region (254) and the second source/drain extension region (256) of the second select transistor (250, 650) are disposed below the gate terminal (250G) of the second select transistor (250, 650).

13. The memory array (20) of claim 12, **characterized in that**:
the first following gate transistor (220) further comprises a second source/drain extension region (226) coupled to the second terminal (228) of the first following gate transistor (220) and below the gate terminal (220G) of the first following gate transistor (220);
the antifuse transistor (230) further comprises a first source/drain extension region (234) coupled to the first terminal (232) of the antifuse transistor (230) and a second source/drain extension region (236) coupled the second terminal (238) of the antifuse transistor (230), the first source/drain extension region (234) and the second source/drain extension region (236) of the antifuse transistor (230) are disposed below the gate terminal (230G) of the antifuse transistor (230); and
the second following gate transistor (240) comprises a second source/drain extension region (244) coupled to the first terminal (242) of the second following gate transistor (240) and below the gate terminal (240G) of the second following gate transistor (240).

14. The memory array (20) of claim 12 or 13, **characterized in that** the antifuse transistor (230) is a metal-oxide-semiconductor capacitor.

15. The memory array (20) of claim 12, **characterized in that**:
the first following gate transistor (420) further comprises a modified source/drain extension region (426) coupled to the second terminal (228) of the first following gate transistor (420) and below the gate terminal (220G) of the first following gate transistor (420);
the antifuse transistor (430) further comprises a modified source/drain extension region (434) coupled to the first terminal (232) and the second terminal (238) of the antifuse transistor (430) and below the gate terminal (230G) of the antifuse transistor (430); and
the second following gate transistor (440) comprises a modified source/drain extension region (444) coupled to the first terminal (242) of the second following gate transistor (440) and below the gate terminal (240G) of the second following gate transistor (440);
wherein the modified source/drain extension region (426) of the first following gate transistor (420), the modified source/drain extension region (434) of the antifuse transistor (430), and the modified source/drain extension region (444) of the second following gate transistor (440) have lower doping density than the first source/drain extension region (224) of the first following gate transistor (420) and first source/drain extension region (246) of the first following gate transistor (440).

16. The memory array (20) of claim 12, **characterized in that**: the second terminal (228) of the first following gate transistor (520), the first terminal (232) and the second terminal (238) of the antifuse transistor (530), and the first terminal (242) of the second following gate transistor (540) are disposed in a well (W1).

17. The memory array (20) of claim 16, **characterized in that**:
the first select transistor (210, 610), the first following gate transistor (520), the second select transistor (250), and the second following gate transistor (540) are formed by N-type metal-oxide-semiconductor field effect transistors; and
the well is an N-well.

18. The memory array (20) of claim 15 or 16, **characterized in that** the antifuse transistor (530) is an antifuse varactor.

19. The memory array (20) of claim 11, **characterized in that** a gate oxide thickness of the gate terminal of the first select transistor (210), a gate oxide thickness of the gate terminal of first following gate transistor (220), a gate oxide thickness of the gate terminal of antifuse transistor (230), a gate oxide thickness of the gate terminal of second following gate transistor (240), and a gate oxide thickness of the gate terminal of second select transistor (250) are substantially the same.

20. The memory array (20) of claim 11, **characterized in that** a gate oxide thickness of the gate terminal of the first select transistor (610), a gate oxide thickness of the gate terminal of first following gate transistor (620), a gate oxide thickness of the gate terminal of second following gate transistor (640), and a gate oxide thickness of the gate terminal of second select transistor (650) are substantially the same and are greater than a gate oxide thickness of the gate terminal of antifuse transistor (630).

21. The memory array (20) of claim 11, **characterized in that**:
memory cells disposed in a same row are coupled to a same antifuse control line, a same following control line, a same word line, and different bit lines; and
memory cells disposed in a same column are coupled to different antifuse control lines, different word lines, the same following control line, and a same bit line.

22. A method for operating a memory array (20), **characterized in that** the memory array (20) comprises a plurality of memory cells (200_{1,1} to 200_{M,N}) of claim 1, and the method comprises:
during a program operation of the memory cell (200_{1,1}):
setting the word line (WL₁) to be in a range from a first voltage (V1) to a second voltage (V2);
setting the following control line (FL) to be in a range from the second voltage (V2) to a third voltage (V3);
setting the antifuse control line (AF₁) to be at the third voltage (V3); and
setting the bit line (BL₁) to be at a fourth voltage (V4);
wherein:
memory cells disposed in a same column are disposed in a same active area, memory cells disposed in a same row are coupled to a same antifuse control line, a same following control line, a same word line, and different bit lines; and memory cells disposed in a same column are coupled to different antifuse control lines, different word lines, the same following control line, and a same bit line; and
the third voltage (V3) is greater than the second voltage (V2), the second voltage (V2) is greater than the first voltage (V1), and the first voltage (V1) is greater than the fourth voltage (V4).

23. The method of claim 22, **characterized in that**:
during the program operation of the memory cell:
setting a bit line coupled to an unselected memory cell disposed in a same row as the memory cell to be at the first voltage.

24. The method of claim 22, **characterized in that**:
during the program operation of the memory cell (200_{1,1}):
setting a word line (WL_{M}) coupled to an unselected memory cell (200_{M,1}) disposed in a same column as the memory cell (200_{1,1}) to be at the fourth voltage (V4); and
setting an antifuse control line (AF_{M}) coupled to the unselected memory cell (200_{M,1}) to be at the fourth voltage (V4).

25. The method of claim 22, **characterized in that**:
during a read operation of the memory cell (200_{1,1}):
setting the word line (WL₁) to be at a first voltage (V1);
setting the following control line (FL) to be at the first voltage (V5);
setting the antifuse control line (AF₁) to be in a range from the first voltage (V1) to a second voltage (V2); and
setting the bit line (BL₁) to be at a fourth voltage (V4);
wherein the second voltage (V2) is greater than the first voltage (V1), and the first voltage (V1) is greater than the fourth voltage (V4).

26. The method of claim 25, **characterized in that**:
during the read operation of the memory cell (200_{1,1}):
setting a bit line (BL_{N}) coupled to an unselected memory cell (200_{1,N}) disposed in a same row as the memory cell (200_{1,N}) to be at the first voltage (V1).

27. The method claim 25, **characterized in that**:
during the read operation of the memory cell (200_{1,1}):
setting a word line (WL_{M}) coupled to an unselected memory cell (200_{M,1}) disposed in a same column as the memory cell (200_{1,1}) to be at the fourth voltage (V4); and
setting an antifuse control line (AF_{M}) coupled to the unselected memory cell (200_{M,1}) to be at the fourth voltage (V4).

28. The method of claim 22, **characterized in that**:
during a reverse read operation of the memory cell (200_{1,1}):
setting the word line (WL₁) to be in a range from a first voltage (V1) to a second voltage (V2);
setting the following control line (FL) to be in a range from the first voltage (V1) to the second voltage (V2);
setting the antifuse control line (AF₁) to be at a fourth voltage (V4); and
setting the bit line (BL₁) to be in a range from the first voltage (V1) to the second voltage (V2); and
wherein the second voltage (V2) is greater than the first voltage (V1), and the first voltage (V1) is greater than the fourth voltage (V4).

29. The method of claim 28, **characterized in that**:
during the reverse read operation of the memory cell (200_{1,1}):
setting a bit line (BL_{N}) coupled to an unselected memory cell (200_{1,N}) disposed in a same row as the memory cell (200_{1,1}) to be at the fourth voltage (V4).

30. The method of claim 28, **characterized in that**:
during the reverse read operation of the memory cell (200_{1,1}):
setting a word line (WL_{M}) coupled to an unselected memory cell (200_{M,1}) disposed in a same column as the memory cell (200_{1,1}) to be at the fourth voltage (V4); and
setting an antifuse control line (AF_{M}) coupled to the unselected memory cell (200_{M,1}) to be at the fourth voltage (V4).

## Patentansprüche

1. Speicherzelle (200_{1,1} bis 200_{M,N}), welche umfasst:
einen ersten Auswahltransistor (210, 610) mit einem ersten Anschluss (212), der mit einer Bitleitung (BL₁ bis BL_{N}) gekoppelt ist, einem zweiten Anschluss (218) und einem Gate-Anschluss (210_{G}), der mit einer Wortleitung (WL₁ bis WL_{M}) gekoppelt ist;
einen ersten nachfolgenden Gate-Transistor (220, 320, 420, 520, 620) mit einem ersten Anschluss (222), der mit dem zweiten Anschluss (218) des ersten Auswahltransistors (210, 610) gekoppelt ist, einem zweiten Anschluss (228) und einem Gate-Anschluss (220G), der mit einer nachfolgenden Steuerleitung (FL) gekoppelt ist;
einen Antifuse-Transistor (230, 330, 430, 530, 630) mit einem ersten Anschluss (232), der nur mit dem zweiten Anschluss (228) des ersten nachfolgenden Gate-Transistors (220, 320, 420, 520, 620) direkt gekoppelt ist, einem zweiten Anschluss (238) und einem Gate-Anschluss (230G), der mit einer Antifuse-Steuerleitung (AF₁ bis AF_{M}) gekoppelt ist;
**dadurch gekennzeichnet, dass** diese ferner umfasst:
einen zweiten nachfolgenden Gate-Transistor (240, 340, 440, 540, 640) mit einem ersten Anschluss (242), der mit dem zweiten Anschluss (238) des Antifuse-Transistors (230, 330, 430, 530, 630) gekoppelt ist, einem zweiten Anschluss (248) und einem Gate-Anschluss (240G), der mit der nachfolgenden Steuerleitung (FL) gekoppelt ist; und
einen zweiten Auswahltransistor (250, 650) mit einem ersten Anschluss (252), der mit dem zweiten Anschluss (248) des zweiten nachfolgenden Gate-Transistors (240, 340, 440, 540, 640) gekoppelt ist, einem zweiten Anschluss (258), der mit der Bitleitung (BL₁ bis BL_{N}) gekoppelt ist, und einem Gate-Anschluss (250G), der mit der Wortleitung (WL₁ bis WL_{M}) gekoppelt ist.

2. Speicherzelle (200_{1,1} bis 200_{M,N}) nach Anspruch 1, **dadurch gekennzeichnet, dass**:
der erste Auswahltransistor (210, 610) ferner einen ersten Source/Drain-Erweiterungsbereich (214), die mit dem ersten Anschluss (212) des ersten Auswahltransistors (210, 610) gekoppelt ist, und einen zweiten Source/Drain- Erweiterungsbereich (216), der mit dem zweiten Anschluss (218) des ersten Auswahltransistors (210, 610) gekoppelt ist, umfasst, worin der erste Source/Drain- Erweiterungsbereich (214) und der zweite Source/Drain- Erweiterungsbereich (216) des ersten Auswahltransistors (210, 610) unter dem Gate-Anschluss (210G) des ersten Auswahltransistors (210, 610) angeordnet sind;
der erste nachfolgende Gate-Transistor (220, 320, 420, 520, 620) ferner einen ersten Source/Drain-Erweiterungsbereich (224) aufweist, der mit dem ersten Anschluss (222) des ersten nachfolgenden Gate-Transistors (220, 320, 420, 520, 620) und unterhalb des Gate-Anschlusses (220G) des ersten nachfolgenden Gate-Transistors (220, 320, 420, 520, 620) gekoppelt ist;
der zweite nachfolgende Gate-Transistor (240, 340, 440, 540, 640) einen ersten Source/Drain-Erweiterungsbereich (246) aufweist, der mit dem zweiten Anschluss (248) des zweiten nachfolgenden Gate-Transistors (240, 340, 440, 540, 640) und unterhalb des Gate-Anschlusses (240G) des zweiten nachfolgenden Gate-Transistors (240, 340, 440, 540, 640) gekoppelt ist; und
der zweite Auswahltransistor (250, 650) einen ersten Source/Drain-Erweiterungsbereich (254), der mit dem ersten Anschluss (252) des zweiten Auswahltransistors (250, 650) gekoppelt ist, und einen zweiten Source/Drain-Erweiterungsbereich (256) umfasst, der mit dem zweiten Anschluss (258) des zweiten Auswahltransistors (250, 650) gekoppelt ist, worin der erste Source/Drain-Erweiterungsbereich (254) und der zweite Source/Drain-Erweiterungsbereich (256) des zweiten Auswahltransistors (250, 650) unterhalb des Gate-Anschlusses (250G) des zweiten Auswahltransistors (250, 650) angeordnet sind.

3. Speicherzelle (2001,1 bis 200M,N) nach Anspruch 2, **dadurch gekennzeichnet, dass**:
der erste nachfolgende Gate-Transistor (220) ferner einen zweiten Source/Drain-Erweiterungsbereich (226) aufweist, der mit dem zweiten Anschluss (228) des ersten nachfolgenden Gate-Transistors (220) und unterhalb des Gate-Anschlusses (220G) des ersten nachfolgenden Gate-Transistors (220) gekoppelt ist;
der Antifuse-Transistor (230) ferner einen ersten Source/Drain-Erweiterungsbereich (234), der mit dem ersten Anschluss (232) des Antifuse-Transistors (230) gekoppelt ist, und einen zweiten Source/Drain-Erweiterungsbereich (236), der mit dem zweiten Anschluss (238) des Antifuse-Transistors (230) gekoppelt ist, umfasst, worin der erste Source/Drain-Erweiterungsbereich (234) und der zweite Source/Drain-Erweiterungsbereich (236) des Antifuse-Transistors (230) unter dem Gate-Anschluss (230G) des Antifuse-Transistors (230) angeordnet sind; und
der zweite nachfolgende Gate-Transistor (240) einen zweiten Source/Drain-Erweiterungsbereich (244) aufweist, der mit dem ersten Anschluss (242) des zweiten nachfolgenden Gate-Transistors (240) und unterhalb des Gate-Anschlusses (240G) des zweiten nachfolgenden Gate-Transistors (240) gekoppelt ist.

4. Speicherzelle (200_{1,1} bis 200_{M,N}) nach Anspruch 2 oder 3, **dadurch gekennzeichnet, dass** der Antifuse-Transistor (230) ein Metall-Oxid-Halbleiter-Kondensator ist.

5. Speicherzelle (200_{1,1} bis 200_{M,N}) nach Anspruch 2, **dadurch gekennzeichnet, dass**:
der erste nachfolgende Gate-Transistor (420) ferner einen modifizierten Source/Drain-Erweiterungsbereich (426) aufweist, der mit dem zweiten Anschluss (228) des ersten nachfolgenden Gate-Transistors (420) und unterhalb des Gate-Anschlusses (220G) des ersten nachfolgenden Gate-Transistors (420) gekoppelt ist;
der Antifuse-Transistor (430) ferner einen modifizierten Source/Drain-Erweiterungsbereich (434) umfasst, der mit dem ersten Anschluss (232) und dem zweiten Anschluss (238) des Antifuse-Transistors (430) und unter dem Gate-Anschluss (230G) des Antifuse-Transistors (430) gekoppelt ist; und
der zweite nachfolgende Gate-Transistor (440) einen modifizierten Source/Drain-Erweiterungsbereich (444) aufweist, der mit dem ersten Anschluss (242) des zweiten nachfolgenden Gate-Transistors (440) und unterhalb des Gate-Anschlusses (240G) des zweiten nachfolgenden Gate-Transistors (440) gekoppelt ist;
worin der modifizierte Source/Drain-Erweiterungsbereich (426) des ersten nachfolgenden Gate-Transistors (420), der modifizierte Source/Drain-Erweiterungsbereich (434) des Antifuse-Transistors (430) und der modifizierte Source/Drain-Erweiterungsbereich (444) des zweiten nachfolgenden Gate-Transistors (440) eine niedrigere Dotierungsdichte aufweisen als der erste Source/Drain-Erweiterungsbereich (224) des ersten nachfolgenden Gate-Transistors (420) und der erste Source/Drain-Erweiterungsbereich (246) des ersten nachfolgenden Gate-Transistors (440).

6. Speicherzelle (200_{1,1} bis 200_{M,N}) nach Anspruch 2, **dadurch gekennzeichnet, dass**:
der zweite Anschluss (228) des ersten nachfolgenden Gate-Transistors (520), der erste Anschluss (232) und der zweite Anschluss (238) des Antifuse-Transistors (530) und der erste Anschluss (242) des zweiten nachfolgenden Gate-Transistors (540) in einer Wanne (W1) angeordnet sind.

7. Speicherzelle (200_{1,1} bis 200_{M,N}) nach Anspruch 6, **dadurch gekennzeichnet, dass**:
der erste Auswahltransistor (210, 610), der erste nachfolgende Gate-Transistor (520), der zweite Auswahltransistor (250) und der zweite nachfolgende Gate-Transistor (540) durch Metall-Oxid-Halbleiter-Feldeffekttransistoren vom N-Typ ausgebildet sind; und
die Wanne (W1) eine N-Wanne ist.

8. Speicherzelle (200_{1,1} bis 200_{M,N}) nach Anspruch 5 oder 6, **dadurch gekennzeichnet, dass** der Antifuse-Transistor (530) ein Antifuse-Varactor ist.

9. Speicherzelle (200_{1,1} bis 200_{M,N}) nach Anspruch 1, **dadurch gekennzeichnet, dass** eine Gate-Oxiddicke des Gate-Anschlusses des ersten Auswahltransistors (210), eine Gate-Oxiddicke des Gate-Anschlusses des ersten nachfolgenden Gate-Transistors (220), eine Gate-Oxiddicke des Gate-Anschlusses des Antifuse-Transistors (230), eine Gate-Oxiddicke des Gate-Anschlusses des zweiten nachfolgenden Gate-Transistors (240) und eine Gate-Oxiddicke des Gate-Anschlusses des zweiten Auswahltransistors (250) im Wesentlichen gleich sind.

10. Speicherzelle (200_{1,1} bis 200_{M,N}) nach Anspruch 1, **dadurch gekennzeichnet, dass** eine Gate-Oxiddicke des Gate-Anschlusses des ersten Auswahltransistors (610), eine Gate-Oxiddicke des Gate-Anschlusses des ersten nachfolgenden Gate-Transistors (620), eine Gate-Oxiddicke des Gate-Anschlusses des zweiten nachfolgenden Gate-Transistors (640) und eine Gate-Oxiddicke des Gate-Anschlusses des zweiten Auswahltransistors (650) im Wesentlichen gleich sind und größer sind als eine Gate-Oxiddicke des Gate-Anschlusses des Antifuse-Transistors (630).

11. Speicheranordnung (20), **dadurch gekennzeichnet, dass** diese mehrere Speicherzellen (200_{1,1} bis 200_{M,N}) nach Anspruch 1 umfasst, worin:
Speicherzellen, die in einer gleichen Spalte angeordnet sind, in einem gleichen aktiven Bereich angeordnet sind.

12. Speicheranordnung (20) nach Anspruch 11, **dadurch gekennzeichnet, dass**:
der erste Auswahltransistor (210, 610) ferner einen ersten Source/Drain- Erweiterungsbereich (214), die mit dem ersten Anschluss (212) des ersten Auswahltransistors (210, 610) gekoppelt ist, und einen zweiten Source/Drain- Erweiterungsbereich (216), die mit dem zweiten Anschluss (218) des ersten Auswahltransistors (210, 610) gekoppelt ist, umfasst, worin der erste Source/Drain- Erweiterungsbereich (214) und der zweite Source/Drain- Erweiterungsbereich (216) des ersten Auswahltransistors (210, 610) unter dem Gate-Anschluss (210G) des ersten Auswahltransistors (210, 610) angeordnet sind;
der erste nachfolgende Gate-Transistor (220, 320, 420, 520, 620) ferner einen ersten Source/Drain-Erweiterungsbereich (224) aufweist, der mit dem ersten Anschluss (222) des ersten nachfolgenden Gate-Transistors (220, 320, 420, 520, 620) und unterhalb des Gate-Anschlusses (220G) des ersten nachfolgenden Gate-Transistors (220, 320, 420, 520, 620) gekoppelt ist;
der zweite nachfolgende Gate-Transistor (240, 340, 440, 540, 640) einen ersten Source/Drain-Erweiterungsbereich (246) aufweist, der mit dem zweiten Anschluss (248) des zweiten nachfolgenden Gate-Transistors (240, 340, 440, 540, 640) und unterhalb des Gate-Anschlusses (240G) des zweiten nachfolgenden Gate-Transistors (240, 340, 440, 540, 640) gekoppelt ist; und
der zweite Auswahltransistor (250, 650) einen ersten Source/Drain-Erweiterungsbereich (254), der mit dem ersten Anschluss (252) des zweiten Auswahltransistors (250, 650) gekoppelt ist, und einen zweiten Source/Drain-Erweiterungsbereich (256), der mit dem zweiten Anschluss (258) des zweiten Auswahltransistors (250, 650) gekoppelt ist, umfasst, worin der erste Source/Drain-Erweiterungsbereich (254) und der zweite Source/Drain-Erweiterungsbereich (256) des zweiten Auswahltransistors (250, 650) unterhalb des Gate-Anschlusses (250G) des zweiten Auswahltransistors (250, 650) angeordnet sind.

13. Speicheranordnung (20) nach Anspruch 12, **dadurch gekennzeichnet, dass**:
der erste nachfolgende Gate-Transistor (220) ferner einen zweiten Source/Drain-Erweiterungsbereich (226) aufweist, der mit dem zweiten Anschluss (228) des ersten nachfolgenden Gate-Transistors (220) und unterhalb des Gate-Anschlusses (220G) des ersten nachfolgenden Gate-Transistors (220) gekoppelt ist;
der Antifuse-Transistor (230) ferner einen ersten Source/Drain-Erweiterungsbereich (234), der mit dem ersten Anschluss (232) des Antifuse-Transistors (230) gekoppelt ist, und einen zweiten Source/Drain-Erweiterungsbereich (236), der mit dem zweiten Anschluss (238) des Antifuse-Transistors (230) gekoppelt ist, umfasst, worin der erste Source/Drain-Erweiterungsbereich (234) und der zweite Source/Drain-Erweiterungsbereich (236) des Antifuse-Transistors (230) unter dem Gate-Anschluss (230G) des Antifuse-Transistors (230) angeordnet sind; und
der zweite nachfolgende Gate-Transistor (240) einen zweiten Source/Drain-Erweiterungsbereich (244) aufweist, der mit dem ersten Anschluss (242) des zweiten nachfolgenden Gate-Transistors (240) und unterhalb des Gate-Anschlusses (240G) des zweiten nachfolgenden Gate-Transistors (240) gekoppelt ist.

14. Speicheranordnung (20) nach Anspruch 12 oder 13, **dadurch gekennzeichnet, dass** der Antifuse-Transistor (230) ein Metall-Oxid-Halbleiter-Kondensator ist.

15. Speicherarray (20) nach Anspruch 12, **dadurch gekennzeichnet, dass**:
der erste nachfolgende Gate-Transistor (420) ferner einen modifizierten Source/Drain-Erweiterungsbereich (426) aufweist, der mit dem zweiten Anschluss (228) des ersten nachfolgenden Gate-Transistors (420) und unterhalb des Gate-Anschlusses (220G) des ersten nachfolgenden Gate-Transistors (420) gekoppelt ist;
der Antifuse-Transistor (430) ferner einen modifizierten Source/Drain-Erweiterungsbereich (434) umfasst, der mit dem ersten Anschluss (232) und dem zweiten Anschluss (238) des Antifuse-Transistors (430) und unter dem Gate-Anschluss (230G) des Antifuse-Transistors (430) gekoppelt ist; und
der zweite nachfolgende Gate-Transistor (440) einen modifizierten Source/Drain-Erweiterungsbereich (444) aufweist, der mit dem ersten Anschluss (242) des zweiten nachfolgenden Gate-Transistors (440) und unterhalb des Gate-Anschlusses (240G) des zweiten nachfolgenden Gate-Transistors (440) gekoppelt ist;
worin der modifizierte Source/Drain-Erweiterungsbereich (426) des ersten nachfolgenden Gate-Transistors (420), der modifizierte Source/Drain-Erweiterungsbereich (434) des Antifuse-Transistors (430) und der modifizierte Source/Drain-Erweiterungsbereich (444) des zweiten nachfolgenden Gate-Transistors (440) eine geringere Dotierungsdichte aufweisen als der erste Source/Drain-Erweiterungsbereich (224) des ersten nachfolgenden Gate-Transistors (420) und der erste Source/Drain-Erweiterungsbereich (246) des ersten nachfolgenden Gate-Transistors (440).

16. Speicheranordnung (20) nach Anspruch 12, **dadurch gekennzeichnet, dass**:
der zweite Anschluss (228) des ersten nachfolgenden Gate-Transistors (520), der erste Anschluss (232) und der zweite Anschluss (238) des Antifuse-Transistors (530) und der erste Anschluss (242) des zweiten nachfolgenden Gate-Transistors (540) in einer Wanne (W1) angeordnet sind.

17. Speicheranordnung (20) nach Anspruch 16, **dadurch gekennzeichnet, dass**:
der erste Auswahltransistor (210, 610), der erste nachfolgende Gate-Transistor (520), der zweite Auswahltransistor (250) und der zweite nachfolgende Gate-Transistor (540) durch Metall-Oxid-Halbleiter-Feldeffekttransistoren vom N-Typ gebildet sind; und
die Wanne eine N-Wanne ist.

18. Speicheranordnung (20) nach Anspruch 15 oder 16, **dadurch gekennzeichnet, dass** der Antifuse-Transistor (530) ein Antifuse-Varactor ist.

19. Speicherarray (20) nach Anspruch 11, **dadurch gekennzeichnet, dass** eine Gate-Oxiddicke des Gate-Anschlusses des ersten Auswahltransistors (210), eine Gate-Oxiddicke des Gate-Anschlusses des ersten nachfolgenden Gate-Transistors (220), eine Gate-Oxiddicke des Gate-Anschlusses des Antifuse-Transistors (230), eine Gate-Oxiddicke des Gate-Anschlusses des zweiten nachfolgenden Gate-Transistors (240) und eine Gate-Oxiddicke des Gate-Anschlusses des zweiten Auswahltransistors (250) im Wesentlichen gleich sind.

20. Speicherarray (20) nach Anspruch 11, **dadurch gekennzeichnet, dass** eine Gate-Oxiddicke des Gate-Anschlusses des ersten Auswahltransistors (610), eine Gate-Oxiddicke des Gate-Anschlusses des ersten nachfolgenden Gate-Transistors (620), eine Gate-Oxiddicke des Gate-Anschlusses des zweiten nachfolgenden Gate-Transistors (640) und eine Gate-Oxiddicke des Gate-Anschlusses des zweiten Auswahltransistors (650) im Wesentlichen gleich sind und größer sind als eine Gate-Oxiddicke des Gate-Anschlusses des Antifuse-Transistors (630).

21. Speicheranordnung (20) nach Anspruch 11, **dadurch gekennzeichnet, dass**:
Speicherzellen, die in einer gleichen Zeile angeordnet sind, mit einer gleichen Antifuse-Steuerleitung, einer gleichen nachfolgenden Steuerleitung, einer gleichen Wortleitung und verschiedenen Bitleitungen gekoppelt sind; und
Speicherzellen, die in einer gleichen Spalte angeordnet sind, mit unterschiedlichen Antifuse-Steuerleitungen, unterschiedlichen Wortleitungen, der gleichen nachfolgenden Steuerleitung und einer gleichen Bitleitung gekoppelt sind.

22. Verfahren zum Betreiben einer Speicheranordnung (20), **dadurch gekennzeichnet, dass** die Speicheranordnung (20) mehrere Speicherzellen (200_{1,1} bis 200_{M,N}) nach Anspruch 1 umfasst, und das Verfahren umfasst:
während einer Programmieroperation der Speicherzelle (2001,1):
Einstellen der Wortleitung (WL₁) auf einen Bereich von einer ersten Spannung (V1) bis zu einer zweiten Spannung (V2) liegt;
Einstellen der nachfolgenden Steuerleitung (FL) auf einen Bereich zwischen der zweiten Spannung (V2) und einer dritten Spannung (V3);
Einstellen der Antifuse-Steuerleitung (AF₁) auf die dritte Spannung (V3); und
Einstellen der Bitleitung (BL₁) auf eine vierte Spannung (V4);
worin:
Speicherzellen, die in einer gleichen Spalte angeordnet sind, in einem gleichen aktiven Bereich angeordnet sind, Speicherzellen, die in einer gleichen Reihe angeordnet sind, mit einer gleichen Antifuse-Steuerleitung, einer gleichen nachfolgenden Steuerleitung, einer gleichen Wortleitung und unterschiedlichen Bitleitungen gekoppelt sind; und Speicherzellen, die in einer gleichen Spalte angeordnet sind, mit unterschiedlichen Antifuse-Steuerleitungen, unterschiedlichen Wortleitungen, der gleichen nachfolgenden Steuerleitung und einer gleichen Bitleitung gekoppelt sind; und
die dritte Spannung (V3) größer ist als die zweite Spannung (V2), die zweite Spannung (V2) größer ist als die erste Spannung (V1), und die erste Spannung (V1) größer ist als die vierte Spannung (V4).

23. Verfahren nach Anspruch 22, **dadurch gekennzeichnet, dass**:
während des Programmiervorgangs der Speicherzelle erfolgt:
Einstellen einer Bitleitung, die mit einer nicht ausgewählten Speicherzelle gekoppelt ist, die in derselben Reihe wie die Speicherzelle angeordnet ist, auf die erste Spannung.

24. Verfahren nach Anspruch 22, **dadurch gekennzeichnet, dass**:
während des Programmiervorgangs der Speicherzelle (200_{1,1}) erfolgt:
Einstellen einer Wortleitung (WL_{M}), die mit einer nicht ausgewählten Speicherzelle (200_{M,1}) gekoppelt ist, die in der gleichen Spalte wie die Speicherzelle (200_{1,1}) angeordnet ist, auf die vierte Spannung (V4); und
Einstellen einer Antifuse-Steuerleitung (AF_{M}), die mit der nicht ausgewählten Speicherzelle (200_{M,1}) gekoppelt ist, auf die vierte Spannung (V4).

25. Verfahren nach Anspruch 22, **dadurch gekennzeichnet, dass**:
während einer Leseoperation der Speicherzelle (200_{1,1}) erfolgt:
Einstellen der Wortleitung (WL₁) auf eine erste Spannung (V1);
Einstellen der folgenden Steuerleitung (FL) auf die erste Spannung (V5);
Einstellen der Antifuse-Steuerleitung (AF₁) auf einen Bereich zwischen der ersten Spannung (V1) und einer zweiten Spannung (V2); und
Einstellen der Bitleitung (BL₁) auf eine vierte Spannung (V4);
worin die zweite Spannung (V2) größer ist als die erste Spannung (V1) und die erste Spannung (V1) größer ist als die vierte Spannung (V4).

26. Verfahren nach Anspruch 25, **dadurch gekennzeichnet, dass**:
während des Lesevorgangs der Speicherzelle (200_{1,1}) erfolgt:
Einstellen einer Bitleitung (BL_{N}), die mit einer nicht ausgewählten Speicherzelle (200_{1, N}) gekoppelt ist, die in einer gleichen Reihe wie die Speicherzelle (200_{1, N}) angeordnet ist, auf die erste Spannung (V1).

27. Verfahren nach Anspruch 25, **dadurch gekennzeichnet, dass**:
während des Lesevorgangs der Speicherzelle (2001,1) erfolgt:
Einstellen einer Wortleitung (WL_{M}), die mit einer nicht ausgewählten Speicherzelle (200_{M,1}) gekoppelt ist, die in einer gleichen Spalte wie die Speicherzelle (200_{1,1}) angeordnet ist, auf die vierte Spannung (V4); und
Einstellen einer Antifuse-Steuerleitung (AF_{M}), die mit der nicht ausgewählten Speicherzelle (200_{M,1}) gekoppelt ist, auf die vierte Spannung (V4).

28. Verfahren nach Anspruch 22, **dadurch gekennzeichnet, dass**:
während einer Rückwärtsleseoperation der Speicherzelle (200_{1,1}) erfolgt:
Einstellen der Wortleitung (WL₁) auf einen Bereich zwischen einer ersten Spannung (V1) und einer zweiten Spannung (V2);
Einstellen der folgenden Steuerleitung (FL) auf einen Bereich zwischen der ersten Spannung (V1) und der zweiten Spannung (V2);
Einstellen der Antifuse-Steuerleitung (AF₁) auf eine vierte Spannung (V4); und
Einstellen der Bitleitung (BL₁) auf einen Bereich von der ersten Spannung (V1) bis zur zweiten Spannung (V2); und
worin die zweite Spannung (V2) größer ist als die erste Spannung (V1) und die erste Spannung (V1) größer ist als die vierte Spannung (V4).

29. Verfahren nach Anspruch 28, **dadurch gekennzeichnet, dass**:
während der Rückwärtsleseoperation der Speicherzelle (200_{1,1}) erfolgt:
Einstellen einer Bitleitung (BL_{N}), die mit einer nicht ausgewählten Speicherzelle (200_{1,N}) gekoppelt ist, die in einer gleichen Reihe wie die Speicherzelle (200_{1,1}) angeordnet ist, auf die vierte Spannung (V4).

30. Verfahren nach Anspruch 28, **dadurch gekennzeichnet, dass**:
während der Rückwärtsleseoperation der Speicherzelle (200_{1,1}) erfolgt:
Einstellen einer Wortleitung (WL_{M}), die mit einer nicht ausgewählten Speicherzelle (200_{M,1}) gekoppelt ist, die in derselben Spalte wie die Speicherzelle (200_{1,1}) angeordnet ist, auf die vierte Spannung (V4); und
Einstellen einer Antifuse-Steuerleitung (AF_{M}), die mit der nicht ausgewählten Speicherzelle (200_{M,1}) gekoppelt ist, auf die vierte Spannung (V4).

## Revendications

1. Cellule de mémoire (200_{1,1} à 200_{M,N}), comprenant:
un premier transistor de sélection (210, 610) ayant une première borne (212) couplée à une ligne de bits (BL₁ à BL_{N}), une deuxième borne (218) et une borne de grille (210G) couplée à une ligne de mots (WL₁ à WL_{M});
un premier transistor de grille suivant (220, 320, 420, 520, 620) ayant une première borne (222) couplée à la deuxième borne (218) du premier transistor de sélection (210, 610), une deuxième borne (228), et une borne de grille (220G) couplée à une ligne de commande suivant (FL);
un transistor antifusible (230, 330, 430, 530, 630) ayant une première borne (232) directement couplée uniquement à la deuxième borne (228) du premier transistor de grille suivant (220, 320, 420, 520, 620), une deuxième borne (238), et une borne de grille (230G) couplée à une ligne de commande antifusible (AF₁ à AF_{M});
**caractérisé par le fait qu'**il comprend en outre
un deuxième transistor de grille suivant (240, 340, 440, 540, 640) ayant une première borne (242) couplée à la deuxième borne (238) du transistor antifusible (230, 330, 430, 530, 630), une deuxième borne (248), et une borne de grille (240G) couplée à la ligne de commande suivante (FL); et
un deuxième transistor de sélection (250, 650) ayant une première borne (252) couplée à la deuxième borne (248) du deuxième transistor de grille suivant (240, 340, 440, 540, 640), une deuxième borne (258) couplée à la ligne de bits (BL₁ à BL_{N}), et une borne de grille (250G) couplée à la ligne de mots (WL₁ à WL_{M}).

2. Cellule de mémoire (200_{1,1} à 200_{M,N}) de la revendication 1, **caractérisée en ce que**:
le premier transistor de sélection (210, 610) comprend en outre une première région d'extension source/drain (214) couplée à la première borne (212) du premier transistor de sélection (210, 610) et une deuxième région d'extension source/drain (216) couplée à la deuxième borne (218) du premier transistor de sélection (210, 610), la première région d'extension source/drain (214) et la deuxième région d'extension source/drain (216) du premier transistor de sélection (210, 610) sont disposées en dessous de la borne de grille (210G) du premier transistor de sélection (210, 610);
le premier transistor de grille suivant (220, 320, 420, 520, 620) comprend en outre une première région d'extension source/drain (224) couplée à la première borne (222) du premier transistor de grille suivant (220, 320, 420, 520, 620) et située en dessous la borne de grille (220G) du premier transistor de grille suivant (220, 320, 420, 520, 620);
le deuxième transistor de grille suivant (240, 340, 440, 540, 640) comprend une première région d'extension source/drain (246) couplée à la deuxième borne (248) du deuxième transistor de grille suivant (240, 340, 440, 540, 640) et située en dessous la borne de grille (240G) du deuxième transistor de grille suivant (240, 340, 440, 540, 640); et
le deuxième transistor de sélection (250, 650) comprend une première région d'extension source/drain (254) couplée à la première borne (252) du deuxième transistor de sélection (250, 650) et une deuxième région d'extension source/drain (256) couplée à la deuxième borne (258) du deuxième transistor de sélection (250, 650), la première région d'extension source/drain (254) et la deuxième région d'extension source/drain (256) du deuxième transistor de sélection (250, 650) sont disposées en dessous de la borne de grille (250G) du deuxième transistor de sélection (250, 650).

3. Cellule de mémoire (200_{1,1} à 200_{M,N}) de la revendication 2, **caractérisée en ce que**:
le premier transistor de grille suivant (220) comprend en outre une deuxième région d'extension source/drain (226) couplée à la deuxième borne (228) du premier transistor de grille suivant (220) et en dessous de la borne de grille (220G) du premier transistor de grille suivant (220);
le transistor antifusible (230) comprend en outre une première région d'extension source/drain (234) couplée à la première borne (232) du transistor antifusible (230) et une deuxième région d'extension source/drain (236) couplée à la deuxième borne (238) du transistor antifusible (230), la première région d'extension source/drain (234) et la deuxième région d'extension source/drain (236) du transistor antifusible (230) étant disposées en dessous la borne de grille (230G) du transistor antifusible (230); et
le deuxième transistor de grille suivant (240) comprend une deuxième région d'extension source/drain (244) couplée à la première borne (242) du deuxième transistor de grille suivant (240) et située en dessous la borne de grille (240G) du deuxième transistor de grille suivant (240).

4. Cellule de mémoire (200_{1,1} à 200_{M,N}) de la revendication 2 ou 3, **caractérisée par le fait que** le transistor antifusible (230) est un condensateur métal-oxyde-semiconducteur.

5. Cellule de mémoire (200_{1,1} à 200_{M,N}) de la revendication 2, **caractérisée en ce que**:
le premier transistor de grille suivant (420) comprend en outre une région d'extension source/drain modifiée (426) couplée à la deuxième borne (228) du premier transistor de grille suivant (420) et en dessous de la borne de grille (220G) du premier transistor de grille suivant (420);
le transistor antifusible (430) comprend en outre une région d'extension source/drain modifiée (434) couplée à la première borne (232) et à la deuxième borne (238) du transistor antifusible (430) et en dessous de la borne de grille (230G) du transistor antifusible (430); et
le deuxième transistor de grille suivant (440) comprend une région d'extension source/drain modifiée (444) couplée à la première borne (242) du deuxième transistor de grille suivant (440) et en dessous la borne de grille (240G) du deuxième transistor de grille suivant (440);
dans laquelle la région d'extension source/drain modifiée (426) du premier transistor de grille suivant (420), la région d'extension source/drain modifiée (434) du transistor antifusible (430) et la région d'extension source/drain modifiée (444) du deuxième transistor de grille suivant (440) ont une densité de dopage inférieure à celle de la première région d'extension source/drain (224) du premier transistor de grille suivant (420) et de la première région d'extension source/drain (246) du premier transistor de grille suivant (440).

6. Cellule de mémoire (200_{1,1} à 200_{M,N}) de la revendication 2, **caractérisée en ce que**:
la deuxième borne (228) du premier transistor de grille suivant (520), la première borne (232) et la deuxième borne (238) du transistor antifusible (530), et la première borne (242) du deuxième transistor de grille suivant (540) sont disposées dans un puits (W1).

7. Cellule de mémoire (200_{1,1} à 200_{M,N}) de la revendication 6, **caractérisée en ce que**:
le premier transistor de sélection (210, 610), le premier transistor de grille suivant (520), le deuxième transistor de sélection (250) et le deuxième transistor de grille suivant (540) sont formés par des transistors à effet de champ à métal-oxyde-semiconducteur de type N; et
le puits (W1) est un puits de type N.

8. Cellule de mémoire (200_{1,1} à 200_{M,N}) de la revendication 5 ou 6, **caractérisée par le fait que** le transistor antifusible (530) est un varactor antifusible.

9. Cellule de mémoire (200_{1,1} à 200_{M,N}) de la revendication 1, **caractérisée en ce que** l'épaisseur de l'oxyde de la borne de grille du premier transistor de sélection (210), l'épaisseur de l'oxyde de la borne de grille du premier transistor de grille suivant (220), l'épaisseur de l'oxyde de la borne de grille du transistor antifusible (230), l'épaisseur de l'oxyde de la borne de grille du deuxième transistor de grille suivant (240) et l'épaisseur de l'oxyde de la borne de grille du deuxième transistor de sélection (250) sont substantiellement les mêmes.

10. Cellule de mémoire (200_{1,1} à 200_{M,N}) de la revendication 1, **caractérisée par le fait que** l'épaisseur de l'oxyde de la borne de grille du premier transistor de sélection (610), l'épaisseur de l'oxyde de la borne de grille du premier transistor de grille suivant (620), l'épaisseur de l'oxyde de la borne de grille du deuxième transistor de grille suivant (640) et l'épaisseur de l'oxyde de la borne de grille du deuxième transistor de sélection (650) sont sensiblement les mêmes et sont supérieures à l'épaisseur de l'oxyde de la borne de grille du transistor antifusible (630).

11. Matrice de mémoire (20) **caractérisée par le fait qu'**elle comprend une pluralité de cellules de mémoire (200_{1,1} à 200_{M,N}) de la revendication 1, dans laquelle:
les cellules de mémoire disposées dans une même colonne sont disposées dans une même zone active.

12. Matrice de mémoire (20) de la revendication 11, **caractérisée par le fait que**:
le premier transistor de sélection (210, 610) comprend en outre une première région d'extension source/drain (214) couplée à la première borne (212) du premier transistor de sélection (210, 610) et une deuxième région d'extension source/drain (216) couplée à la deuxième borne (218) du premier transistor de sélection (210, 610), la première région d'extension source/drain (214) et la deuxième région d'extension source/drain (216) du premier transistor de sélection (210, 610) sont disposées en dessous de la borne de grille (210G) du premier transistor de sélection (210, 610);
le premier transistor de grille suivant (220, 320, 420, 520, 620) comprend en outre une première région d'extension source/drain (224) couplée à la première borne (222) du premier transistor de grille suivant (220, 320, 420, 520, 620) et située en dessous la borne de grille (220G) du premier transistor de grille suivant (220, 320, 420, 520, 620);
le deuxième transistor de grille suivant (240, 340, 440, 540, 640) comprend une première région d'extension source/drain (246) couplée à la deuxième borne (248) du deuxième transistor de grille suivant (240, 340, 440, 540, 640) et située en dessous la borne de grille (240G) du deuxième transistor de grille suivant (240, 340, 440, 540, 640); et
le deuxième transistor de sélection (250, 650) comprend une première région d'extension source/drain (254) couplée à la première borne (252) du deuxième transistor de sélection (250, 650) et une deuxième région d'extension source/drain (256) couplée à la deuxième borne (258) du deuxième transistor de sélection (250, 650), la première région d'extension source/drain (254) et la deuxième région d'extension source/drain (256) du deuxième transistor de sélection (250, 650) sont disposées en dessous de la borne de grille (250G) du deuxième transistor de sélection (250, 650).

13. Matrice de mémoire (20) de la revendication 12, **caractérisée en ce que**:
le premier transistor de grille suivant (220) comprend en outre une deuxième région d'extension source/drain (226) couplée à la deuxième borne (228) du premier transistor de grille suivant (220) et en dessous la borne de grille (220G) du premier transistor de grille suivant (220);
le transistor antifusible (230) comprend en outre une première région d'extension source/drain (234) couplée à la première borne (232) du transistor antifusible (230) et une deuxième région d'extension source/drain (236) couplée à la deuxième borne (238) du transistor antifusible (230), la première région d'extension source/drain (234) et la deuxième région d'extension source/drain (236) du transistor antifusible (230) étant disposées en dessous la borne de grille (230G) du transistor antifusible (230); et
le deuxième transistor de grille suivant (240) comprend une deuxième région d'extension source/drain (244) couplée à la première borne (242) du deuxième transistor de grille suivant (240) et située en dessous la borne de grille (240G) du deuxième transistor de grille suivant (240).

14. Matrice de mémoire (20) de la revendication 12 ou 13, **caractérisée par le fait que** le transistor antifusible (230) est un condensateur métal-oxyde-semiconducteur.

15. Matrice de mémoire (20) de la revendication 12, **caractérisée par le fait que**:
le premier transistor de grille suivant (420) comprend en outre une région d'extension source/drain modifiée (426) couplée à la deuxième borne (228) du premier transistor de grille suivant (420) et en dessous de la borne de grille (220G) du premier transistor de grille suivant (420);
le transistor antifusible (430) comprend en outre une région d'extension source/drain modifiée (434) couplée à la première borne (232) et à la deuxième borne (238) du transistor antifusible (430) et en dessous de la borne de grille (230G) du transistor antifusible (430); et
le deuxième transistor de grille suivant (440) comprend une région d'extension source/drain modifiée (444) couplée à la première borne (242) du deuxième transistor de grille suivant (440) et en dessous la borne de grille (240G) du deuxième transistor de grille suivant (440);
dans laquelle la région d'extension source/drain modifiée (426) du premier transistor de grille suivant (420), la région d'extension source/drain modifiée (434) du transistor antifusible (430) et la région d'extension source/drain modifiée (444) du deuxième transistor de grille suivant (440) ont une densité de dopage inférieure à celle de la première région d'extension source/drain (224) du premier transistor de grille suivant (420) et de la première région d'extension source/drain (246) du premier transistor de grille suivant (440).

16. Matrice de mémoire (20) de la revendication 12, **caractérisée par le fait que**:
la deuxième borne (228) du premier transistor de grille suivant (520), la première borne (232) et la deuxième borne (238) du transistor antifusible (530), et la première borne (242) du deuxième transistor de grille suivant (540) sont disposées dans un puits (W1).

17. Matrice de mémoire (20) de la revendication 16, **caractérisée par le fait que**:
le premier transistor de sélection (210, 610), le premier transistor de grille suivant (520), le deuxième transistor de sélection (250) et le deuxième transistor de grille suivant (540) sont formés par des transistors à effet de champ à métal-oxyde-semiconducteur de type N; et
le puits est un puits de type N.

18. Matrice de mémoire (20) de la revendication 15 ou 16, **caractérisée par le fait que** le transistor antifusible (530) est un varactor antifusible.

19. Matrice de mémoire (20) de la revendication 11, **caractérisée par le fait que** l'épaisseur de l'oxyde de la borne de grille du premier transistor de sélection (210), l'épaisseur de l'oxyde de la borne de grille du premier transistor de grille suivant (220), l'épaisseur de l'oxyde de la borne de grille du transistor antifusible (230), l'épaisseur de l'oxyde de la borne de grille du deuxième transistor de grille suivant (240) et l'épaisseur de l'oxyde de la borne de grille du deuxième transistor de sélection (250) sont substantiellement les mêmes.

20. Matrice de mémoire (20) de la revendication 11, **caractérisée par le fait que** l'épaisseur de l'oxyde de la borne de grille du premier transistor de sélection (610), l'épaisseur de l'oxyde de la borne de grille du premier transistor de grille suivant (620), l'épaisseur de l'oxyde de la borne de grille du deuxième transistor de grille suivant (640) et l'épaisseur de l'oxyde de la borne de grille du deuxième transistor de sélection (650) sont sensiblement les mêmes et sont supérieures à l'épaisseur de l'oxyde de la borne de grille du transistor antifusible (630).

21. Matrice de mémoire (20) de la revendication 11, **caractérisée par le fait que**:
les cellules de mémoire disposées sur une même rangée sont couplées à une même ligne de commande antifusible, une même ligne de commande suivante, une même ligne de mot et des lignes de bit différentes; et
les cellules de mémoire disposées dans une même colonne sont couplées à des lignes de commande antifusibles différentes, à des lignes de mots différentes, à la même ligne de commande suivante et à une même ligne de bits.

22. Procédé de fonctionnement d'une matrice de mémoire (20), **caractérisé en ce que** la matrice de mémoire (20) comprend une pluralité de cellules de mémoire (200_{1,1} à 200_{M,N}) de la revendication 1, et le procédé comprend:
pendant une opération de programmation de la cellule de mémoire (200_{1,1}):
réglage de la ligne de mots (WL₁) dans une plage allant d'une première tension (V1) à une deuxième tension (V2);
réglage de la ligne de commande suivante (FL) dans une plage allant de la deuxième tension (V2) à une troisième tension (V3);
réglage de la ligne de commande antifusible (AF₁) pour qu'elle soit à la troisième tension (V3); et
réglage de la ligne de bits (BL₁) pour qu'elle soit à une quatrième tension (V4);
dans lequel:
les cellules de mémoire disposées dans une même colonne sont disposées dans une même zone active, les cellules de mémoire disposées dans une même rangée sont couplées à une même ligne de commande antifusible, une même ligne de commande suivante, une même ligne de mot et des lignes de bit différentes, et les cellules de mémoire disposées dans une même colonne sont couplées à des lignes de commande antifusible différentes, des lignes de mot différentes, la même ligne de commande suivante et une même ligne de bit; et
la troisième tension (V3) est supérieure à la deuxième tension (V2), la deuxième tension (V2) est supérieure à la première tension (V1), et la première tension (V1) est supérieure à la quatrième tension (V4).

23. Procédé de la revendication 22, **caractérisée par le fait que**:
pendant le fonctionnement du programme de la cellule de mémoire:
la première tension est appliquée à une ligne de bits couplée à une cellule de mémoire non sélectionnée située dans la même rangée que la cellule de mémoire.

24. Procédé de la revendication 22, **caractérisée par le fait que**:
pendant l'opération de programmation de la cellule de mémoire (200_{1,1}):
réglage d'une ligne de mot (WL_{M}) couplée à une cellule de mémoire non sélectionnée (200_{M,1}) disposée dans une même colonne que la cellule de mémoire (200_{1,1}) pour être à la quatrième tension (V4); et
réglage d'une ligne de commande antifusible (AF_{M}) couplée à la cellule de mémoire non sélectionnée (200_{M,1}) pour qu'elle soit à la quatrième tension (V4).

25. Procédé de la revendication 22, **caractérisée par le fait que**:
pendant une opération de lecture de la cellule de mémoire (200_{1,1}):
réglage de la ligne de mot (WL₁) à une première tension (V1);
réglage de la ligne de commande suivante (FL) à la première tension (V5);
réglage de la ligne de commande antifusible (AF₁) pour qu'elle soit dans une plage allant de la première tension (V1) à une deuxième tension (V2); et
réglage de la ligne de bits (BL₁) à une quatrième tension (V4);
dans laquelle la deuxième tension (V2) étant supérieure à la première tension (V1) et la première tension (V1) étant supérieure à la quatrième tension (V4).

26. Procédé de la revendication 25, **caractérisée par le fait que**:
pendant l'opération de lecture de la cellule de mémoire (200_{1,1}):
réglage d'une ligne de bits (BL_{N}) couplée à une cellule de mémoire non sélectionnée (200_{1,N}) disposée dans une même rangée que la cellule de mémoire (200_{1,N}) pour qu'elle soit à la première tension (V1).

27. Procédé de la revendication 25, **caractérisé par le fait que**:
pendant l'opération de lecture de la cellule de mémoire (200_{1,1}):
réglage d'une ligne de mot (WL_{M}) couplée à une cellule de mémoire non sélectionnée (200_{M,1}) disposée dans une même colonne que la cellule de mémoire (200_{1,1}) à la quatrième tension (V4); et
réglage d'une ligne de commande antifusible (AF_{M}) couplée à la cellule de mémoire non sélectionnée (200_{M,1}) à la quatrième tension (V4).

28. Procédé de la revendication 22, **caractérisée par le fait que**:
pendant une opération de lecture inverse de la cellule de mémoire (200_{1,1}):
réglage de la ligne de mot (WL₁) pour qu'elle soit dans une plage allant d'une première tension (V1) à une deuxième tension (V2);
réglage de la ligne de commande suivante (FL) dans une plage allant de la première tension (V1) à la deuxième tension (V2);
réglage de la ligne de commande antifusible (AF₁) à une quatrième tension (V4); et
réglage de la ligne de bits (BL1) pour qu'elle soit dans une plage allant de la première tension (V1) à la deuxième tension (V2); et
dans laquelle la deuxième tension (V2) est supérieure à la première tension (V1) et la première tension (V1) est supérieure à la quatrième tension (V4).

29. Procédé de la revendication 28, **caractérisée par le fait que**:
pendant l'opération de lecture inverse de la cellule de mémoire (200_{1,1}):
réglage d'une ligne de bits (BL_{N}) couplée à une cellule de mémoire non sélectionnée (200_{1,N}) disposée dans une même rangée que la cellule de mémoire (200_{1,1}) pour qu'elle soit à la quatrième tension (V4).

30. Procédé de la revendication 28, **caractérisée par le fait que**:
pendant l'opération de lecture inverse de la cellule de mémoire (200_{1,1}):
réglage d'une ligne de mot (WL_{M}) couplée à une cellule de mémoire non sélectionnée (200_{M,1}) disposée dans une même colonne que la cellule de mémoire (200_{1,1}) à la quatrième tension (V4); et
réglage d'une ligne de commande antifusible (AF_{M}) couplée à la cellule de mémoire non sélectionnée (200_{M,1}) à la quatrième tension (V4).
